# EUROPEAN PATENT APPLICATION

(11) **EP 1 727 143 A1**
(43) Date of publication of application: **29.11.2006**
(21) Application number: 05719370.8
(22) Date of filing: 22.02.2005
(51) Int. Cl.: G11B 20/10, G11B 27/00, H04N 5/781, H04N 5/91, G06F 3/06

(54) **INFORMATION PROCESSING DEVICE AND METHOD, PROGRAM RECORDING MEDIUM, AND PROGRAM**

(30) Priority: 16.03.2004 JP 2004073793
(71) Applicant: SONY CORPORATION, Tokyo 141-0001 (JP)
(72) Inventor: ITO, Ryogo, c/o Sony Corporation, Tokyo 1410001 (JP); YOKOTA, Junichi, c/o Sony Corporation, Tokyo 1410001 (JP); HAMA, Toru, c/o Sony Corporation, Tokyo 1410001 (JP); YAMADA, Takaharu, c/o Sony Corporation, Tokyo 1410001 (JP); KANOTA, Keiji, c/o Sony Corporation, Tokyo 1410001 (JP)
(74) Representative: Horner, David Richard
(86) International application number: PCT/JP2005/002780
(87) International publication number: WO 2005/088632

(57) **Abstract**

The present invention relates to an information processing apparatus and method, a program recording medium, and a program which mitigate inconveniences due to a difference in recording format when performing the processing of copying or moving data between two recording media of different recording formats. A device control section 16 supplies UDF data, which is adopted for a DVD, to a device control section 17 together with an ATAPI command used when recording data onto a DVD. The device control section 17 converts the ATAPI command supplied from the device control section 16 into an ATA command corresponding to the ATAPI command, supplies it to an HDD 18 together with data supplied from the device control section 16 together with the ATAPI command, thereby controlling recording of the UDF data onto a hard disk 18A. The present invention is applicable to, for example, a hard disk recorder.

## Description

### Technical Field

The present invention relates to an information processing apparatus and method, a program recording medium, and a program. More specifically, the present invention relates to an information processing apparatus and method, a program recording medium, and a program which allow, when performing the processing of copying or moving data between two recording media of different recording formats, recorded data to be handled without much concern for the difference in recording format due to the difference in recording medium.

### Background Art

Recent years have seen widespread use of a DVD (Digital Versatile Disk) recorder, a hard disk recorder incorporating a hard disk (magnetic disk) with a capacity greater than that of a DVD, and the like, in particular, as apparatus for recording AV data (data including image data and sound data) such as television broadcast programs.

In recent years, in particular, it has become common to temporarily record AV data such as television broadcast programs onto a hard disk and then copy (or dub) or move the AV data onto a DVD.

In this case, there are some inconveniences resulting from the difference between a hard disk and a DVD as recording media. For example, when performing dubbing of AV data, since a hard disk and a DVD differ in recording capacity, if the size of the AV data recorded on the hard disk exceeds the recording capacity of the DVD, it is necessary, in order to record the AV data onto the DVD, to divide the AV data into sizes smaller than the recording capacity of the DVD and then record the divided data onto a plurality of DVDs. In this case, the processing of previously dividing one AV data into a plurality of data is required, which detracts from ease of use.

In view of this, there has been proposed an information recording apparatus aimed at reducing the inconveniences resulting from the difference in recording capacity (see, for example, Patent Document 1).

[Patent Document 1] Japanese Unexamined Patent Application Publication No. 2002-304822

### Disclosure of Invention

### Problem to be Solved by the Invention

In addition to the difference in recording capacity, a DVD and a hard disk differ in the recording format itself. Accordingly, to dub or move AV data recorded on a hard disk onto a DVD, it is necessary to perform the conversion processing from the recording format of the hard disk into the recording format of the DVD.

In view of the above-described circumstances, it is an object of the present invention to make it possible to perform, in a more suitable manner, the processing of dubbing or moving data recorded on a recording medium onto another recording medium of a recording format different from that of the recording medium.

### Means for Solving the Problem

A first information processing apparatus of the present invention includes: recording requesting means for requesting recording of recording data, which is data to be recorded, in accordance with a predetermined format adopted for a first recording medium; first recording control means for controlling recording of the recording data onto the first data recording medium, in response to the request for recording the recording data made by the recording requesting means; and second recording control means for controlling recording of the recording data onto a second recording medium, in accordance with the control of the first recording control means.

The first information processing apparatus of the present invention may be configured such that the first recording control means outputs the recording data together with a command requesting recording of the recording data onto the first data recording medium, and the second recording control means causes the recording data to be recorded onto the second data recording medium by converting the command output by the first recording control means into a command requesting recording of data onto the second data recording medium and outputting the command.

The first information processing apparatus of the present invention may be configured such that the first information processing apparatus further includes another recording requesting means for requesting recording of the recording data in accordance with another format different from the predetermined format, the other recording requesting means requests recording of the recording data output by the first recording control means, in accordance with the other format, and that the second recording control means causes the recording data to be recorded onto the second data recording medium, in response to the request for recording the recording data made by the other recording requesting means.

The first information processing apparatus of the present invention may be configured such that the first data recording medium is an optical disk, and the second data recording medium is a hard disk.

A first information processing method of the present invention includes: a recording requesting step of requesting recording of recording data, which is data to be recorded, in accordance with a predetermined format adopted for a first recording medium; a first recording control step of controlling recording of the recording data onto the first data recording medium, in response to the request for recording the recording data made in the recording requesting step; and a second recording control step of controlling recording of the recording data onto a second recording medium, in accordance with the control of the first recording control step.

A program in a first program recording medium of the present invention causes a computer to execute processing including: a recording requesting step of requesting recording of recording data, which is data to be recorded, in accordance with a predetermined format adopted for a first recording medium; a first recording control step of controlling recording of the recording data onto the first data recording medium, in response to the request for recording the recording data made in the recording requesting step; and a second recording control step of controlling recording of the recording data onto a second recording medium, in accordance with the control of the first recording control step.

A first program of the present invention causes a computer to execute processing including: a recording requesting step of requesting recording of recording data, which is data to be recorded, in accordance with a predetermined format adopted for a first recording medium; a first recording control step of controlling recording of the recording data onto the first data recording medium, in response to the request for recording the recording data made in the recording requesting step; and a second recording control step of controlling recording of the recording data onto a second recording medium, in accordance with the control of the first recording control step.

A second information processing apparatus of the present invention includes: reading requesting means for requesting reading of record data, which is previously recorded data, in accordance with a predetermined format adopted for a first recording medium; first reading control means for controlling reading of the record data from the first recording medium, in response to the request by the reading requesting means; and second reading control means for controlling reading of the record data from a second recording medium, in accordance with the control of the first reading control means.

The second information processing apparatus of the present invention may be configured such that the first reading control means outputs a command requesting reading of the record data from the first data recording medium, and the second reading control means causes the record data to be read from the second data recording medium by converting the command output by the first reading control means into a command requesting reading of the record data from the second data recording medium and outputting the command.

The second information processing apparatus of the present invention may be configured such that the second information processing apparatus further includes another reading requesting means for requesting reading of the record data in accordance with another format different from the predetermined format, the other reading requesting means requests, in response to the command output by the first reading control means, reading of the record data in accordance with the other format, and that the second reading control means causes the record data to be read from the second data recording medium, in response to the request for reading the record data made by the other reading requesting means.

The second information processing apparatus of the present invention may further include communication means for communicating with an external device including the first data recording medium to transfer the record data read from the second data recording medium to the external device including the first data recording medium.

The second information processing apparatus of the present invention may be configured such that the first data recording medium is an optical disk, and the second data recording medium is a hard disk.

A second information processing method includes: a reading requesting step of requesting reading of record data, which is previously recorded data, in accordance with a predetermined format adopted for a first recording medium; a first reading control step of controlling reading of the record data from the first recording medium, in response to the request made in the reading requesting step; and a second reading control step of controlling reading of the record data from a second recording medium, in accordance with the control of the first reading control step.

A program in a second program recording medium of the present invention causes a computer to execute processing including: a reading requesting step of requesting reading of record data, which is previously recorded data, in accordance with a predetermined format adopted for a first recording medium; a first reading control step of controlling reading of the record data from the first recording medium, in response to the request made in the reading requesting step; and a second reading control step of controlling reading of the record data from a second recording medium, in accordance with the control of the first reading control step.

A second program of the present invention causes a computer to execute processing including: a reading requesting step of requesting reading of record data, which is previously recorded data, in accordance with a predetermined format adopted for a first recording medium; a first reading control step of controlling reading of the record data from the first recording medium, in response to the request made in the reading requesting step; and a second reading control step of controlling reading of the record data from a second recording medium, in accordance with the control of the first reading control step.

A third information processing apparatus of the present invention includes: a recording requesting section requesting recording of recording data, which is data to be recorded, in accordance with a predetermined format adopted for a first recording medium; a first recording control section controlling recording of the recording data onto the first data recording medium, in response to the request for recording the recording data made by the recording requesting section; and a second recording control section controlling recording of the recording data onto a second recording medium, in accordance with the control of the first recording control section.

A third information processing method of the present invention includes: requesting recording of recording data, which is data to be recorded, in accordance with a predetermined format adopted for a first recording medium; performing first recording control for recording the recording data onto the first data recording medium, in response to the request for recording the recording data; and performing second recording control for recording the recording data onto a second recording medium in accordance with the first recording control.

A fourth information processing apparatus of the present invention includes: a reading requesting section requesting reading of record data in accordance with a predetermined format adopted for a first recording medium; a first reading control section controlling reading of the record data from the first recording medium, in response to the request by the reading requesting section; and a second reading control section controlling reading of the record data from a second recording medium in accordance with the control of the first reading control section.

A fourth information processing apparatus of the present invention includes: requesting reading of record data in accordance with a predetermined format adopted for a first recording medium; performing first reading control for reading the record data from the first recording medium in response to the request; and performing second reading control for reading the record data from a second recording medium in accordance with the first reading control.

According to the first information processing apparatus, information processing method, program recording medium, and program as well as the third information processing apparatus and information processing method of the present invention, recording of data is requested in accordance with the predetermined format, and in response to the request, the control for recording data onto the first recording medium is performed, and further, in accordance with the control, the control for recording data onto the second data recording medium is performed.

According to the second information processing apparatus, information processing method, program recording medium, and program as well as the fourth information processing apparatus and information processing method of the present invention, reading of data recorded on the second recording medium is requested in accordance with the predetermined format, and in response to the request, the control of reading data from the first recording medium is performed, and further, in accordance with the control, the control of reading data from the second recording medium is performed.

### Advantages

According to the present invention, information can be recorded. Further, according to the present invention, previously recorded data can be read. In particular, information can be recorded onto a recording medium that performs recording of information, in accordance with a recording format of another recording medium which is different from the recording format of the recording medium, thereby facilitating copying of data onto another recording medium.

### Brief Description of the Drawings

Fig. 1 is a block diagram showing a configuration example of an embodiment of a hard disk recorder to which the present invention is applied.
Fig. 2 is a diagram showing a configuration example of the recording area of a DVD.
Fig. 3 is a diagram showing a configuration example of the recording area of a hard disk 18A of a hard disk recorder 1 shown in Fig. 1.
Fig. 4 is a diagram showing another configuration example of the recording area of the hard disk 18A of the hard disk recorder 1 shown in Fig. 1.
Fig. 5 is a diagram illustrating each of read commands respectively used when reading data recorded on the DVD and the HDD.
Fig. 6 is a diagram illustrating each of record commands respectively used when recording data onto the DVD and the HDD.
Fig. 7 is a diagram illustrating a SEND OPC INFORMATION command as an ATAPT command.
Fig. 8 is a flowchart illustrating the recording processing by the hard disk recorder 1 shown in Fig. 1.
Fig. 9 is a flowchart illustrating the dubbing processing by the hard disk recorder 1 shown in Fig. 1.
Fig. 10 is a diagram showing the configuration of a virtual DVD area arranged on the hard disk 18A shown in Fig. 1.
Fig. 11 is a flowchart illustrating the processing of detecting the end of disk image data by the hard disk recorder 1 shown in Fig. 1.
Fig. 12 is a block diagram showing a configuration example of another embodiment of a hard disk recorder to which the present invention is applied.
Fig. 13 is a diagram showing a configuration example of the recording area of the hard disk 18A of a hard disk recorder 40 shown in Fig. 12.
Fig. 14 is a diagram showing the configuration of an MBR (Master Boot Record) 61 shown in Fig. 13.
Fig. 15 is a diagram showing the configuration of partition information stored in a partition table 72 within the MBR shown in Fig. 14.
Fig. 16 is a diagram showing a configuration example of the recording area of the hard disk 18A of the hard disk recorder 40 shown in Fig. 12.
Fig. 17 is a diagram showing the configuration of a directory entry shown in Fig. 16.
Fig. 18 is a flowchart illustrating the recording processing by the hard disk 40 shown in Fig. 12.
Fig. 19 is a flowchart illustrating the dubbing processing in the hard disk 40 shown in Fig. 12.
Fig. 20 is a block diagram showing a configuration example of an embodiment of a video camera to which the present invention is applied.
Fig. 21 is a diagram showing the processing executed by a DVD recorder on a layer-by-layer basis.
Fig. 22 is a diagram showing the processing executed by the hard disk recorder 1 shown in Fig. 1 on a layer-by-layer basis.
Fig. 23 is a diagram showing the processing executed by the hard disk recorder 40 shown in Fig. 12 on a layer-by-layer basis.
Fig. 24 is a block diagram showing a configuration example of a personal computer.

### Reference Numerals

- 1: hard disk recorder
- 11: input operation section
- 12: AV data input section
- 13: AV output section
- 14: recording/reproduction section
- 15: UDF processing section
- 16: device control section
- 17: device control section
- 17A: command conversion section
- 18: HDD (Hard Disk Drive)
- 18A: hard disk
- 19: communication section
- 31: lead-in area
- 32: management information
- 33: logical volume area
- 34: management information
- 35: lead-out area
- 40: hard disk recorder
- 41: FAT processing section
- 42: device control section
- 51: beginning sector
- 52: space area
- 53: data area
- 61: MBR (master Boot Record)
- 61-1: start code
- 61-2: partition table
- 62: first partition
- 63: second partition
- 64: third partition
- 65: fourth partition
- 71: start code
- 72: partition table
- 81: flag
- 82: start sector (CHS)
- 83: type
- 84: end sector (CHS)
- 85: start sector (LBA)
- 86: partition size
- 91: MBR
- 92: space area
- 93: partition
- 101: FAT
- 102: FAT (backup)
- 103: file
- 104: file
- 105: file
- 106: space area
- 121: name
- 122: extension name
- 123: attributes
- 124: reserved
- 125: creation time
- 126: creation date
- 127: last access date
- 128: beginning cluster number (High)
- 129: recording time
- 130: recording date
- 131: beginning cluster number (Low)
- 132: file size
- 140: video camera
- 141: CPU
- 142: power source
- 143: ROM
- 144: RAM
- 145: camera function section
- 146: image signal processing section
- 147: optical lens section
- 148: photoelectric conversion section
- 149: image input/output section
- 150: liquid crystal display
- 151: sound processing section
- 152: sound input section
- 153: operation input section
- 154: communication section
- 156: HDD
- 156A: hard disk
- 200: personal computer
- 201: CPU
- 202: ROM
- 203: RAM
- 204: internal bus
- 205: input/output interface
- 206: input section
- 207: output section
- 208: recording section
- 209: communication section
- 210: drive
- 211: magnetic disk
- 212: optical disk
- 213: magneto-optical disk
- 214: semiconductor memory

### Best Mode for Carrying Out the Invention

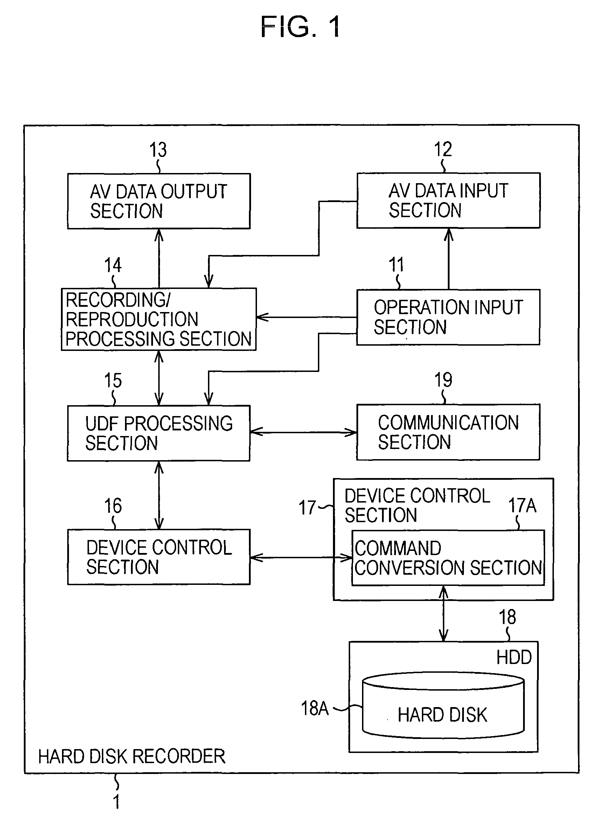

Fig. 1 is a block diagram showing a configuration example of an embodiment of a hard disk recorder to which the present invention is applied.

A hard disk recorder 1 includes an operation input section 11, an AV data input section 12, an AV data output section 13, a recording/reproduction processing section 14, a UDF (Universal Disk Format) processing section 15, a device control section 16, a device control section 17, an HDD (Hard Disk Drive) 18, and a communication section 19.

The operation input section 11 is operated by the user when inputting various commands to the hard disk recorder 1, and supplies a signal indicating the execution of processing designated through user's operation, for example, a signal relating to the reception of AV data, to the AV data input section 12. Further, the operation input section 11 supplies, for example, a signal indicating the start or end of recording of AV data received (acquired) through the AV data input section 12, a signal indicating the start or end of reproduction of AV data that has been already recorded on a hard disk (HD) 18A built in the HDD 18, and the like to the recording/reproduction processing section 14.

Further, the operation input section 11 supplies a signal relating to dubbing of data recorded on the hard disk 18A, that is, copying of data onto another recording medium (for example, a DVD), to the UDF processing section 15.

The AV data input section 12 acquires, for example, AV data such as television program broadcast data, and supplies the data to the recording/reproduction processing section 14. The AV data input section 12 is composed of, for example, a tuner or an AV data input/output terminal.

The AV data output section 13 outputs AV data supplied from the recording/reproduction processing section 14 to an external device (for example, a display, a speaker, or a DVD recorder). The AV data output section 13 is composed of, for example, an AV data output terminal.

In accordance with a designation from the operation input section 11, the recording/reproduction processing section 14 performs recording processing of AV data acquired by the AC data input section 12 or reproduction processing of AV data recorded on the HDD 18. When the start of recording of the AV data acquired by the AV data input section 12 is requested through the operation input section 11, the recording/reproduction processing section 14 creates recording data in accordance with a predetermined format. That is, the recording/reproduction processing section 14 creates recording data in accordance with either a video mode (Video Format) or a VR mode (Video Recording Format), and supplies the data to the UDF processing section 15 together with information requesting recording.

Further, when the start of reproduction processing is requested through the operation input section 11, the recording/reproduction processing section 14 requests the UDF processing section 15 to read the AV data that is requested to be reproduced. Further, in response to this request, the UDF processing section 15 reads the AV data supplied from the UDF processing section 15, and supplies the data to the data output section 13.

In accordance with, for example, UDF (Universal Disk Format) adopted for DVDs, the UDF processing section 15 requests the device control section 16 to record the recording data supplied from the recording/reproduction processing section 14.

Further, when requested by the recording/reproduction processing section 14 to read AV data to be reproduced, in accordance with UDF, the UDF processing section 15 requests the device control section 16 to read the AV data to be reproduced, and supplies to the recording/reproduction processing section 14 the AV data supplied from the device control section 16 in response to the request.

Further, when the start of dubbing processing is requested through the operation input section 11, the UDF processing section 15 requests the device control section 16 to read the data to be dubbed (hereinafter, referred to as the "dubbing data"), and supplies the dubbing data supplied from the device control section 16 in response to the request to the communication section 19.

When performing recording of AV data, the device control section 16 supplies the data of the UDF format including recording data, which is supplied from the UDF processing section 15, to the device control section 17 together with, for example, a record command requesting recording, from among ATAPI (AT Attachment Packet Interface) commands with respect to DVD drive. Further, when performing reproduction of the AV data recorded on the hard disk 18A, or dubbing or moving of the data onto another recording medium, that is, when reading of the AV data recorded on the hard disk 18A is requested, the device control section 16 supplies to the device control section 17 a read command (ATAPI command) requesting reading of the AV data, whereby the AV data is read from the hard disk 18A via the device control section 17.

That is, with the device control section 16 controlling the HDD 18 via the device control section 17, the hard disk 18A is handled as a DVD.

In accordance with a record command supplied from the device control section 16, the device control section 17 requests the HDD 18 to record the data of the UDF format including recording data which is supplied from the device control section 16. That is, the device control section 17 has a command conversion section 17A built therein. The record command of an ATAPI command supplied from the device control section 16 is converted into a record command of an ATA (AT Attachment) command with respect to the HDD in the command conversion section 17A, and supplied to the HDD 18 together with the data of the UDF format including recording data which is supplied from the device control section 16. Likewise, the device control section 17 converts, by the command conversion section 17A, a read command of an ATAPI command supplied from the device control section 16 into a read command of an ATT command with respect to the HDD, and supplies it to the HDD 18.

In the command conversion processing performed in the command conversion section 17A at this time, rather than simply issuing a corresponding ATA command instead of the ATAPI command supplied from the device control section 16, adjustment of the difference in sector size is performed between a DVD and a hard disk.

While data is handled on a per-sector basis in the ATA command and ATAPI command, the size of a sector differs between a DVD and a hard disk. Specifically, one sector of a DVD equals 2048 bytes, and one sector of a hard disk equals 512 bytes. That is, it is necessary to adjust the difference in size when issuing a command. Further, although details will be described later, the number of sectors that can be handled itself differs between the ATA command and the ATAPI command; accordingly, depending on the size (number of sectors) of the data to be handled (recorded or read), it may be necessary to issue a plurality of the same commands.

The HDD 18, which has the hard disk 18A built therein, executes processing corresponding to a command (ATA command) supplied from the device control section 17. For example, in accordance with a record command that is an ATA command, the HDD 18 records data supplied with the record command onto the hard disk 18A. In this case, in the HDD 18, a plurality of areas to be handled as a single DVD (hereinafter referred to as the "virtual DVD area", details of which will be described later) are set on the hard disk 18A, with recording being performed with respect to an area designated by the user. The hard disk 18A is thus handled as a plurality of virtual DVDs.

Further, in accordance with the read command for reading data, the HDD 18 reads AV data designated by the user from the hard disk 18A, and supplies the data to the device control section 16 via the device control section 17.

The communication section 19 transmits and supplies the dubbing data supplied from the UDF processing section 15 to an external device (not shown) (for example, a DVD recorder) connected to the hard disk recorder 1, via a network.

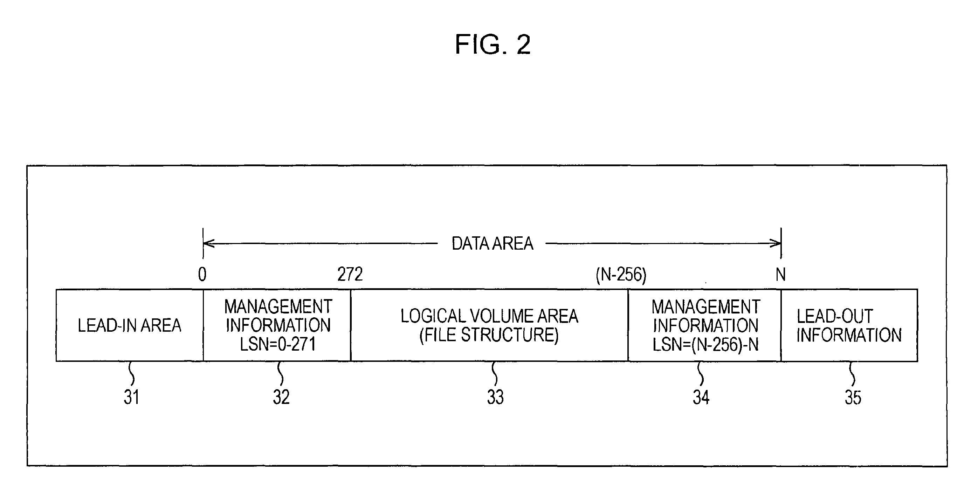

Next, prior to describing an example of the recording structure on the hard disk 18A of the hard disk recorder 1 shown in Fig. 1, referring to Fig. 2, the structure of data recorded on the above-mentioned virtual DVD area will be described, as compared with the actual recording structure of a DVD.

Fig. 2 provides a simple illustration of an example of the actual recording structure of a DVD.

First, the actual recording structure of a DVD is described. A lead-in area 31 is arranged at the beginning (inner periphery), and then a management information area 32, a logical volume area 33, a management information area 34, and a lead-out area 35 are arranged.

The lead-in area 31 is an area to be read during disk recognition, and contains information such as TOC (Table Of Contents).

The management information area 32 and the management information area 34 each represent an area where information for performing disc management in accordance with UFD is set.

The logical volume area 33 is an area in which actual data, that is, AV data or the like is recorded in the file format.

The lead-out area 35 is an area representing the end of the recording area on a DVD, or the end of a session.

Simply speaking, the structure of data recorded in the virtual DVD area is one from which the lead-in area 31 and the lead-out area 35 in the DVD shown in Fig. 2 are omitted. That is, the structure is the same as the structure of the area of logical sector numbers 0 to N (N represents the maximum value (last logical sector number) of the logical sector numbers (LSNs) allocated on a recording medium (for example, a DVD), and differs according to the recording capacity of the recording medium or the size of recorded information (for example, AV data)) in UDF.

In this specification, data recorded onto a recording medium, on which data is to be recorded, in accordance with the recording format of another recording medium that differs from the recording medium in recording format is referred to as the disk image data. As an example of the disk image data, a series of data recorded in the area of the logical sector numbers 0 to N in UDF is used as the disk image data.

Incidentally, as described above, the hard disk recorder 1 performs, for example, recording of AV data onto the hard disk 18A in the same manner as the recording of AV data onto a DVD. That is, the hard disk recorder 1 handles the HDD 18 as a virtual DVD drive, and records the AV data onto the hard disk 18A in accordance with UDF. An example of the recording structure on the hard disk 18A in this case will be described below.

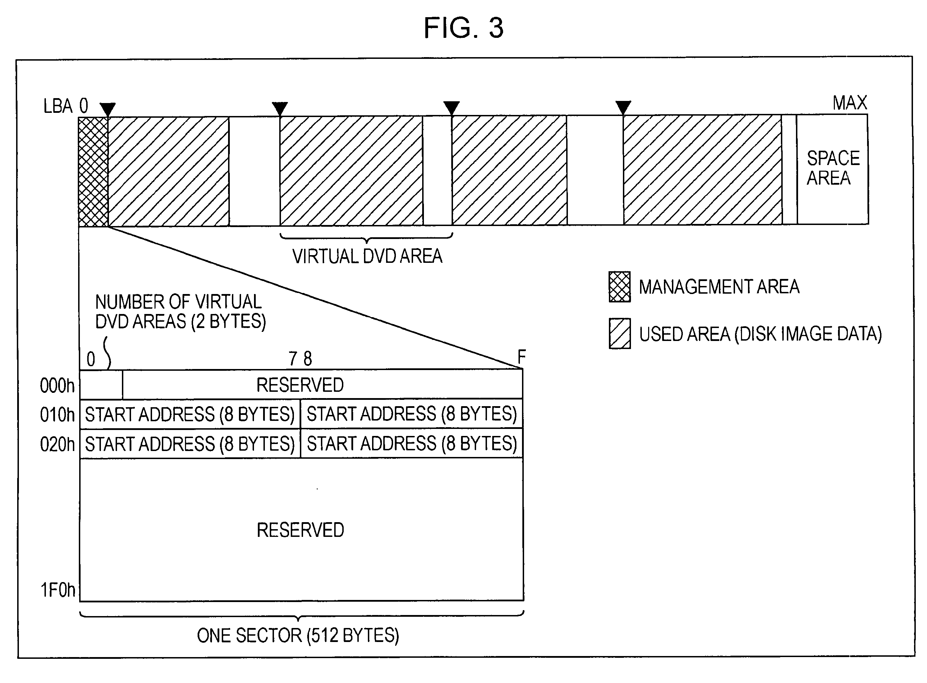

Fig. 3 is a diagram illustrating an example of the structure of the area on the hard disk 18A of the hard disk recorder 1 shown in Fig. 1.

In the hard disk 18A shown in Fig. 3, management information relating to the area on the hard disk 18A is arranged at the beginning, and areas (virtual DVD areas) split in predetermined sizes (for example, 4.7 GB) are provided subsequent to the management information.

In the area corresponding to the one sector (512 bytes) located at the beginning of the hard disk 18A, management information relating to recording areas for recording AV data or the like, which are located subsequent to the area, is set. The management information is composed of an area (2 bytes) indicating the number of virtual DVD areas present on the hard disk 18A, and areas (8 bytes) indicating the start addresses of the virtual DVD areas. The areas indicating the start addresses of the virtual DVD areas exist in correspondence with the number of virtual DVD areas. In Fig. 3, four virtual DVD areas are provided on the hard disk 18A, and areas indicating four start addresses are provided in the management information.

The above-described disk image data, that is, data configured in accordance with UDF, is recorded in each of the virtual DVD areas.

In this way, the area on the hard disk 18A is split into areas of predetermined sizes, and each of the split areas is regarded as one DVD, thus allowing one hard disk 18A to be handled as a plurality of DVDs. Further, in the example of Fig. 3, for example, the area on the hard disk 18A can be split into areas of a size corresponding to one DVD, each of the split areas being used in accordance with the uses intended by the user. For example, AV data can be divided by genre and recorded into different areas.

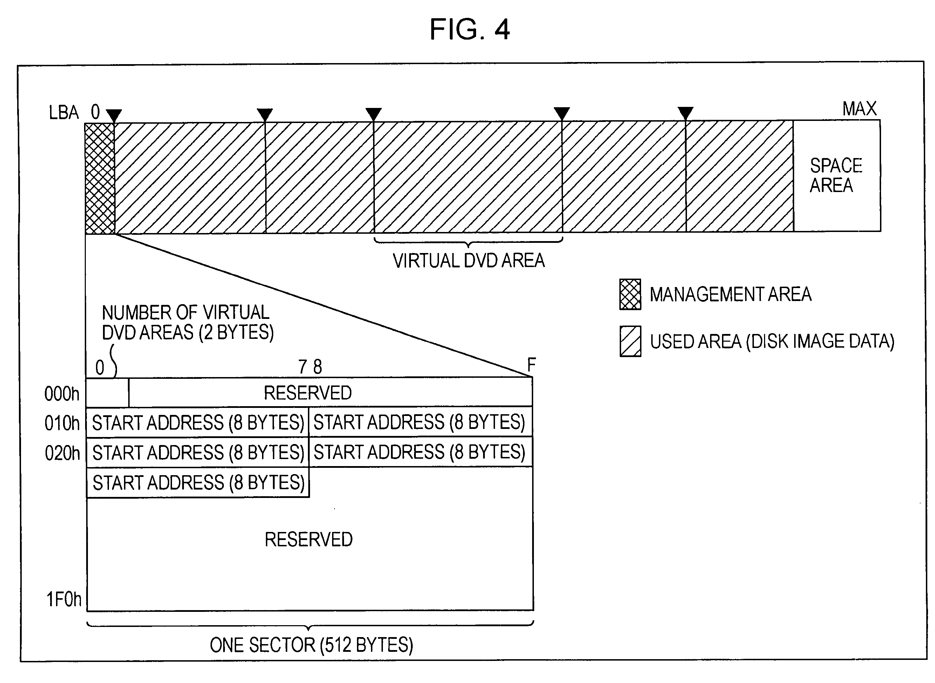

Fig. 4 is a diagram illustrating another example of the structure of the area on the hard disk 18A of the hard disk recorder 1 shown in Fig. 1.

As in the case shown in Fig. 3, in the hard disk 18A shown in Fig. 4 as well, management information relating to the area on the hard disk 18A is arranged at the beginning, and virtual DVD areas are provided subsequent to the management information.

As in the case shown in Fig. 3, in the area corresponding to the one sector (512 bytes) located at the beginning of the hard disk 18A, management information relating to recording areas for recording AV data or the like, which are located subsequent to the area, is set.

In Fig. 4, five virtual DVD areas are provided on the hard disk 18A, and areas indicating five start addresses are provided in the management information.

In the example shown in Fig. 4, the respective virtual DVD areas are not split by predetermined sizes in advance but are sequentially created as data is recorded and in accordance with the size of recorded data. That is, recording is performed in such a manner as to close up the unused areas in the respective virtual DVD areas shown in Fig. 3.

As in the case of Fig. 3, the above-mentioned disk image data is recorded in each of the virtual DVD areas.

In this way, the area on the hard disk 18A is split for each recorded data, and each of the split areas is regarded as one DVD, thus allowing one hard disk 18A to be handled as a plurality of DVDs. Further, unlike the case shown in Fig. 3, no unused areas are produced, whereby the area on the hard disk 18A can be used more efficiently.

By splitting the recording area on the hard disk 18A as described above, information (AV data or the like) can be recorded as if a plurality of DVDs were stored in the HDD 18. In particular, in view of the increasing capacity of the recent hard disks, it is possible to set the number of virtual DVD areas to be greater than four in the case of Fig. 3 or five in the case of Fig. 4.

To perform the recording as described above, it is necessary to deal with the difference in recording format which results from the difference between the hard disk 18A and the DVD as recording media. Accordingly, the hard disk recorder 1 performs recording by matching the recording format for the information recorded onto the hard disk 18A with the recording format for the DVD, that is, in accordance with UDF. However, other than this, the hard disk 18A and the DVD are also different as to the devices (drives) handling these media. Accordingly, it is necessary to absorb the difference in control method resulting from the difference in device, that is, the difference in used command. In view of this, as described above, the processing of converting the ATAPI command used in the DVD drive into the ATA command used in the HDD is required.

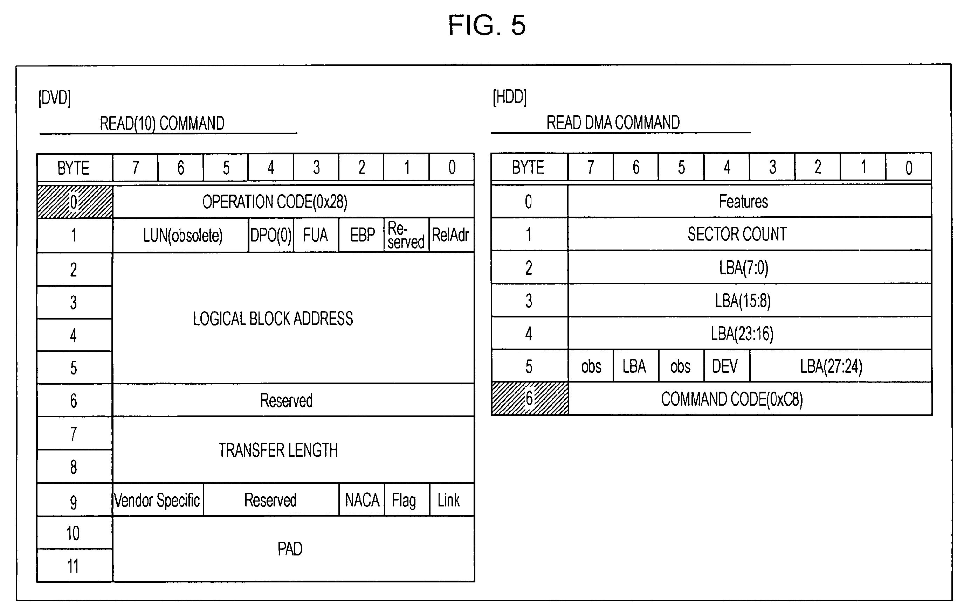

A specific example of the conversion from an ATAPI command into an ATA command will now be described with reference to Figs. 5 to 7.

Fig. 5 is a diagram illustrating a read command used for reading data recorded on a DVD or a hard disk during such processing as reproduction or dubbing.

The READ(10) command on the left-hand side in Fig. 5 is an ATAPI command used when reading data from a DVD, and the READ DMA command on the right-hand side in Fig. 5 is an ATA command used when reading data from a hard disk.

First, the READ(10) command on the left-hand side in Fig. 5 will be described.

Operation code indicates the command type, and is set as 0x28 when an ATAPI command is the READ(10) command. The numerical value after 0x is represents a hexadecimal value; the same applies to the following description.

LUN (Logical Unit Number) represents the logical address of a physical or virtual peripheral apparatus.

DPO (Disable Page Out) is unused, and 0 is set in the DPO area.

FUA (Force Unit Access) represents access destination accessed by a logical unit due to the READ(10) command. For example, when FUA is 1, this indicates that the logical unit accesses a recording medium (for example, a DVD) by executing the READ(10) command; when FUA is 0, this indicates that the logical unit accesses a cache memory. The term logical unit as used herein refers to a physical or virtual peripheral apparatus.

RelAdr (Relative Address) is unused, and 0 is set in the RelAdr area.

Logical Block Address represents the recording start position.

Transfer Length represents the size of the data to be read.

Vendor Specific is used for purposes in accordance with the specifications of each vendor.

NACA represents whether or not Normal ACA is supported.

Flag is used when making interruption between mutually associated commands.

Link indicates whether or not a command issuing section requests automatic association to the next command in accordance with the normal termination of the command issued immediately before.

In Reserved, 0 is set to all the bits.

In PAD, 0 is set to all the bits.

Next, the READ DMA command on the right-hand side of Fig. 5 will be described.

Features is unused in the READ DMA command.

Sector Count indicates the sector size for data reading. Here, one sector equals 512 bytes corresponding to one sector of a hard disk.

LBA (7:0), LBA (15:8), LBA (23:16), and LBA (27:24) (Logical Block Address) each represent the data reading start position. LBA (7:0) represents the value of 0th to 7th bits of the value indicating the data reading start position, LBA (15:8) represents the value of 8th to 15th bits of the value indicating the data reading start position, LBA (23:16) represents the value of 16th to 23rd bits of the value indicating the data reading start position, and LBA (27:24) represents the value of 24th to 28th bits of the value indicating the data reading start position. It should be noted that 0(th) bit represents LSB (Least Significant Bit).

obs indicates that this area is an unused area.

LBA (Logical Block Address) indicates whether or not an LBA address is to be specified; when an LBA address is to be specified, it is set to 1.

DEV indicates a specified device.

Command Code represents the command type; when the ATA command is the READ DMA command, 0xC8 is set.

Description will now be given of specific conversion processing between the two commands, the READ (10) command and the READ DMA command, shown in Fig. 5.

With the above-described two commands, that is, the READ (10) command and the READ DMA command, when reading data from a DVD and a hard disk, respectively, the size of the data to be read is specified using the sector size. However, as described above, the size (byte count) of one sector differs between a DVD and a hard disk. Accordingly, the hard disk recorder 1 shown in Fig. 1 performs adjustment on the size difference.

That is, when the hard disk recorder 1 performs recording of data onto the hard disk 18A, the device control section 16 supplies the READ(10) command as the ATAPI command to the device control section 17.

The device control section 17 converts, by means of the command conversion section 17A, the READ(10) command supplied from the device control section 16 into a READ DMA command. That is, the command conversion section 17A performs the processing of converting the parameters of the READ(10) command into the parameters of the READ DMA command and setting the parameters.

Specifically, first, referring to Operation Code of the ATAPI command, Command Code of the corresponding ATA command is set. In the example shown in Fig. 5, 0x28 (Operation Code) in the READ(10) command on the left-hand side of Fig. 5 is converted into 0xC8 (Command Code) in the READ DMA command on the right-hand side of Fig. 5.

Further, Logical Block Address of the READ(10) command corresponds to LBA (7:0), LBA (15:8), LBA (23:16), and LBA (27:24) of the READ DMA command. The value of Logical Block Address of the READ(10) command is set to LBA (7:0), LBA (15:8), LBA (23:16), and LBA (27:24) of the READ DMA command. It should be noted, however, that since the size of the Logical Block Address area in the READ(10) command is 32 bits, and the combined size of the areas of LBA (7:0), LBA (15:8), LBA (23:16), and LBA (27:24) in the READ DMA command is 28 bits, the lower 28 bits of Logical Block Address in the READ(10) command are set to the respective corresponding positions of LBA (7:0), LBA (15:8), LBA (23:16), and LBA (27:24) in the READ DMA command.

Further, Transfer Length of the READ(10) command corresponds to Sector Count of the READ DMA command. However, since the size of the Sector Count area of the READ DMA command is 8 bit as opposed to the size of the Transfer Length area of the READ(10) command which is 16 bits, the range (maximum value) of the values (sizes) that can be specified is different. Further, considering the difference in byte count per one sector between a DVD and a hard disk (one sector of a DVD: 2048 bytes, one sector of a hard disk: 512 bytes), the value of Transfer Length of the READ(10) command that can be served by one READ DMA command is only 64 or less. That is, when a sector size indicating the value (size) specified by Transfer Length of the READ(10) command is 65 (sectors) or more, it is necessary to issue a plurality of READ DMA commands.

For instance, when a READ(10) command with a value of Transfer Length indicating 128 sectors is supplied from the device control section 16, the command conversion section 17A issues a READ DMA command in which the value of Sector Count is 0x00 (in Sector Count of the READ DMA command, 0x01 to 0xFF represent 1 to 255, respectively, and 0X00 represents 256) to the HDD 18 twice.

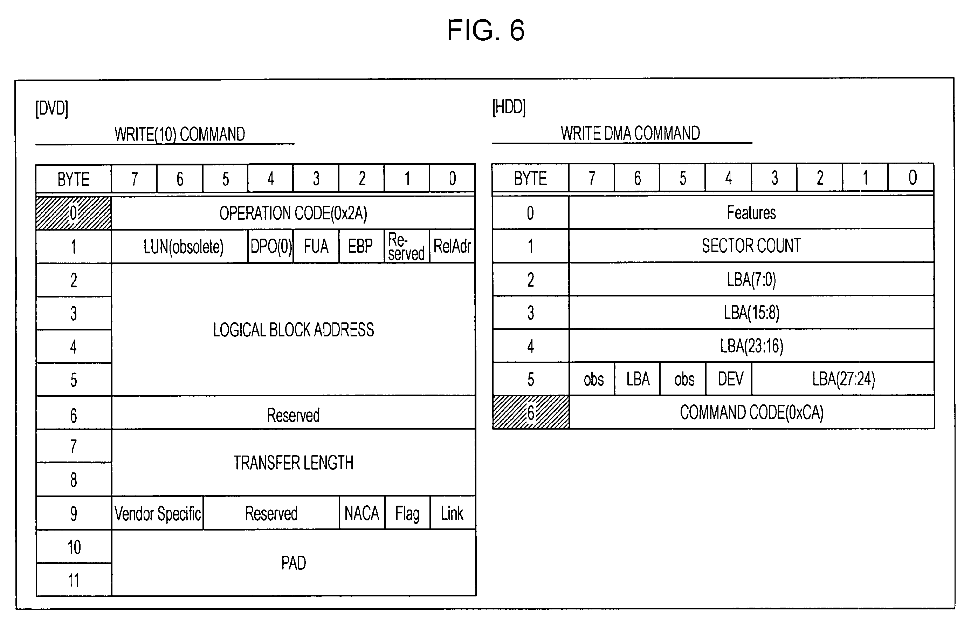

Fig. 6 is a diagram illustrating a record command used when performing data recording onto a DVD or a hard disk.

The WRITE(10) command on the left-hand side of Fig. 6 is the ATAPI command used when writing data onto a DVD, and the WRITE DMA command on the right-hand side of Fig. 6 is the ATA command used when writing data onto a hard disk.

First, the WRITE(10) command on the left-hand side of Fig. 6 will be described.

Command Code represents the command type; when an ATAPI command is the WRITE(10) command, it is set to 0x2A.

LUN (Logical Unit Number) represents the logical address of a physical or virtual peripheral apparatus.

DPO (Disable Page Out) is unused, and 0 is set in the DPO area.

FUA (Force Unit Access) represents access destination accessed by a logical unit due to the WRITE(10) command. For example, when FUA is 1, this indicates that the logical unit accesses a recording medium (for example, a DVD) by executing the WRITE(10) command; when FUA is 0, this indicates that the logical unit accesses a cache memory. The term logical unit as used herein refers to a physical or virtual peripheral apparatus.

EBP (Erase By-pass) is unused, and 0 is set in the EBP area.

RelAdr (Relative Address) is unused, and 0 is set in the RelAdr area.

Logical Block Address represents the recording start position.

Transfer Length represents the size of the data to be read.

In Reversed, 0 is set to all the bits.

Vendor Specific, NACA, Flag, Link, and PAD included in the tenth to twelfth bytes of the WRITE(10) command are the same as those in the tenth to twelfth bytes of the READ (10) command shown in Fig. 5.

Next, the WRITE DMA command on the right-hand side of Fig. 6 will be described.

Features is unused in the WRITE DMA command.

Sector Count indicates the sector size for data reading. Here, one sector equals 512 bytes corresponding to one sector of a hard disk.

LBA (7:0), LBA (15:8), LBA (23:16), and LBA (27:24) (Logical Block Address) each represent the data writing start position. LBA (7:0) represents the value of 0th to 7th bits of the value indicating the data writing start position, LBA (15:8) represents the value of 8th to 15th bits of the value indicating the data writing start position, LBA (23:16) represents the value of 16th to 23rd bits of the value indicating the data writing start position, and LBA (27:24) represents the value of 24th to 28th bits of the value indicating the data writing start position. It should be noted that 0(th) bit represents LSB (Least Significant Bit).

obs indicates that this area is an unused area.

LBA (Logical Block Address) indicates whether or not an LBA address is to be specified; when an LBA address is to be specified, it is set to 1.

DEV indicates a specified device.

Command Code represents the command type; when an ATA command is the WRITE DMA command, 0xCA is set.

As for the conversion processing between the two commands shown in Fig. 6, the WRITE(10) command and the WRITE DMA command, since only the value indicating the command type (Operation Code (ATAPI command) and Command Code (ATA command)) is different, and the conversion processing is otherwise the same, description thereof is omitted here.

Further, unlike the READ(10) command shown in Fig. 5 or the WRITE(10) command shown in Fig. 6, there are ATAPI commands not supported by ATA commands (for which no corresponding ATA commands exist).

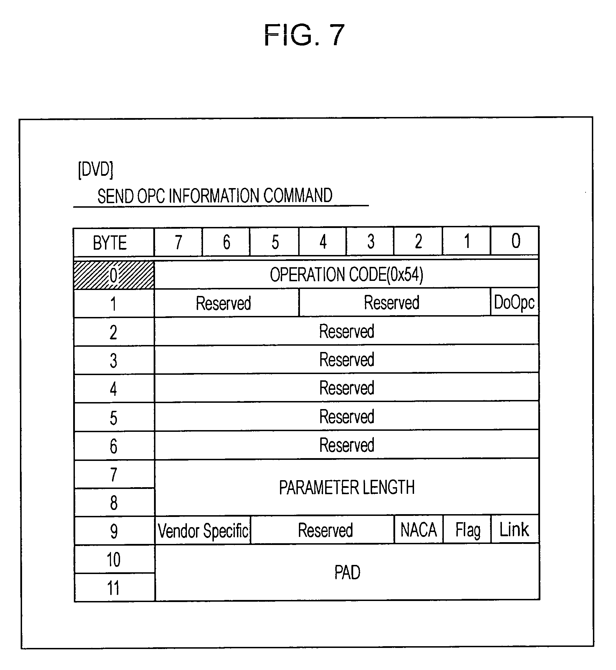

Fig. 7 illustrates SEND OPC INFORMATION as an example of such ATAPI commands.

The SEND OPC INFORMATION command is a command used when specifying, with respect to a logical unit, the lens power calibration (OPC: Optimum Power Calibration) value, which corresponds to a recording medium (for example, a DVD) currently set in the logical unit.

Operation Code indicates the command type, and is set as 0x54 when an ATAPI command is the SEND OPC INFORMATION command.

DoOPC indicates whether or not the value of OPC is to be changed.

Parameter List Length indicates the byte size of a parameter relating to the value of OPC, which is transferred after the SEND OPC INFORMATION command.

In Reserved, 0 is set to all the bits.

Vendor Specific, NACA, Flag, Link, and PAD included in the tenth to twelfth bytes of the SEND OPC INFORMATION command are the same as those in the tenth to twelfth bytes of the READ(10) command shown in Fig. 5.

With regard to the ATAPI command for which no corresponding ATA command exists, such as the SEND OPC INFORMATION command, the command conversion section 17A performs no processing and only performs processing of returning a completion notification to the device control section 16.

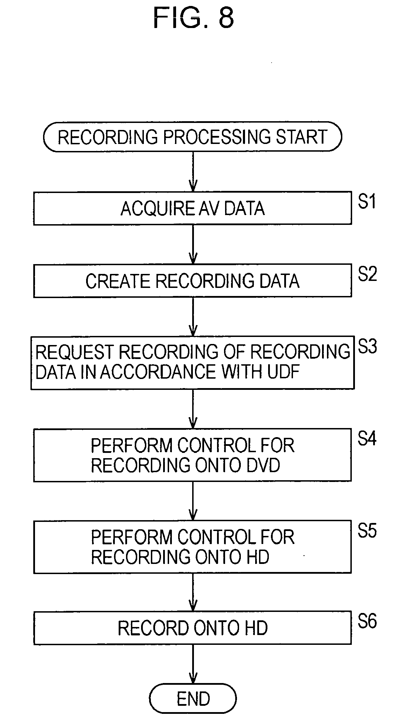

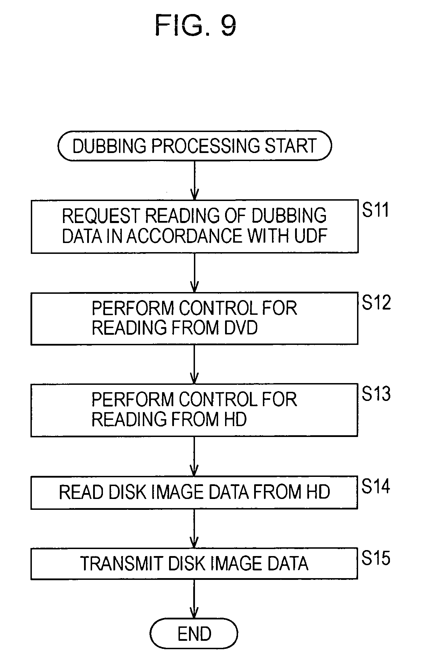

Next, referring to Figs. 8 and 9, description will be given of recording processing by the hard disk recorder shown in Fig. 1, and dubbing processing of data recorded on the hard disk recorder 1 onto an external device connected to the hard disk recorder 1 via a network.

Fig. 8 is a flowchart illustrating the recording processing by the hard disk recorder 1 shown in Fig. 1.

In step S1, the AV data input section 12 acquires AV data and supplies it to the recording/reproduction processing section 14.

In step S2, on the basis of the AV data supplied from the AV data input section 12, the recording/reproduction processing section 14 creates recording data in accordance with a predetermined format. That is, the recording/reproduction processing section 14 creates recording data in accordance with either a video mode (Video Format) or a VR mode (Video Recording Format), and supplies the data to the UDF processing section 15 together with information requesting recording.

In step S3, in accordance with UDF, the UDF processing section 15 requests the device control section 16 to record the recording data supplied from the recording/reproduction processing section 14.

In step S4, in response to the request made by the UDF processing section 15 to record recording data, the device control section 16 supplies the data of the UDF format including recording data, which is supplied from the UDF processing section 15, to the device control section 17 together with a record command. The record command here is, for example, the WRITE(10) command of the ATAPI command described above.

In step S5, the device control section 17 converts the WRITE(10) command of the ATAPI command, which is the record command supplied from the device control section 16, into a WRITE DMA command of the ATA command, and supplies it to the HDD 18 together with the data of the UDF format including recording data, which is supplied from the device control section 16.

In step S6, the HDD 18 records the data of the UDF format including recording data, which is supplied from the device control section 17 together with the record command, onto the hard disk 18A.

By recording information (for example, AV data) in this way in accordance with UDF, one HDD 18 can be handled as a DVD recorder loaded with a plurality of DVDs, thereby making it possible to save the trouble of replacing the DVD, which is required when a DVD recorder that can load only one DVD is used.

Further, for example, it is possible to record AV data of many television broadcast programs on the HDD 18 in advance, and easily dub onto a DVD only those AV data which are truly desired to be saved. This can positively contribute to making effective use of a DVD.

Further, with regard to the access speed, the access speed to a hard disk is generally faster than the access speed to a DVD. Accordingly, by recording AV data onto the hard disk 18A, it is possible to achieve greater ease of use in variable speed reproduction or editing of the AV data.

Fig. 9 is a flowchart illustrating dubbing processing in the hard disk recorder shown in Fig. 1.

The description here will be given of the case where disk image data (including AV data) recorded on the hard disk 18A of the hard disk recorder 1 is dubbed (transmitted) onto an external device connected to the hard disk recorder 1 via a network.

Here, it is assumed that the disk image data recorded on the hard disk 18A is dubbed onto a DVD. Accordingly, the device connected to the hard disk recorder 1 in this example is a DVD recorder for performing data recording onto the DVD.

In step S11, the UDF processing section 15 requests, in accordance with UDF, reading of the disk image data recorded on the hard disk 18A. That is, the UDF processing section 15 requests the device control section 16 to read the disk image data recorded in the virtual DVD area specified through user's operation (all the data including management information, which are recorded in the virtual DVD area).

In step S12, in response to the request from the UDF processing section 15 to read the disk image data, the device control section 16 supplies a read command to the device control section 17. Here, the read command is, for example, the READ(10) command of the ATAPI command described above.

In step S13, the device control section 17 converts the READ(10) command of the ATAPI command, which is the read command supplied from the device control section 16, into a READ DMA command of the ATA command and supplies it to the HDD 18.

In step S14, in accordance with the read command supplied from the device control section 17, the HDD 18 reads disk image data from the hard disk 18A, and supplies it to the device control section 17. The disk image data supplied to the device control section 17 at this time is further supplied to the UDF processing section 15 via the device control section 16.

In step S15, the UDF processing section 15 supplies the disk image data supplied from the device control section 16 to the communication section 19. The communication section 19 transmits the disk image data supplied from the UDF processing section 15 to a DVD recorder that is an external device as the dubbing destination, via a network.

That is, when dubbing the disk image data recorded on the hard disk 18A onto a DVD, the hard disk recorder 1 can supply the disk image data that is to be dubbed onto the DVD in a state where the data is recorded on the DVD, that is, while keeping the data structure of the UDF format as it is, whereby processing such as recording format conversion, which has been conventionally performed, can be omitted. Then, in the DVD recorder, the data supplied from the hard disk recorder 1 may simply be written in from the beginning of the recording area of the DVD as it is, thereby enabling smooth dubbing processing.

Further, since HDD enables high-speed data reading, and is capable of supplying different pieces of read data to a plurality of different external devices in parallel (simultaneously) via a network. Accordingly, when a plurality of external devices capable of recognizing UDF are connected via a network, different pieces of disk image data (including AV data) can be simultaneously supplied to the respective external devices. In this case, the hard disk recorder 1 can be used as a home server.

As described above, data is recorded on the hard disk 18A in the hard disk recorder 1, thereby making it possible to realize "large volume recording", which is an advantage of a hard disk recorder. Further, in the hard disk recorder 1, by recording data onto the hard disk 18A using the recording format for a DVD, the dubbing processing of the data from the hard disk 18A to the DVD can be facilitated. As a result, it is also possible to realize "ease of distribution", which is an advantage of a DVD recorder.

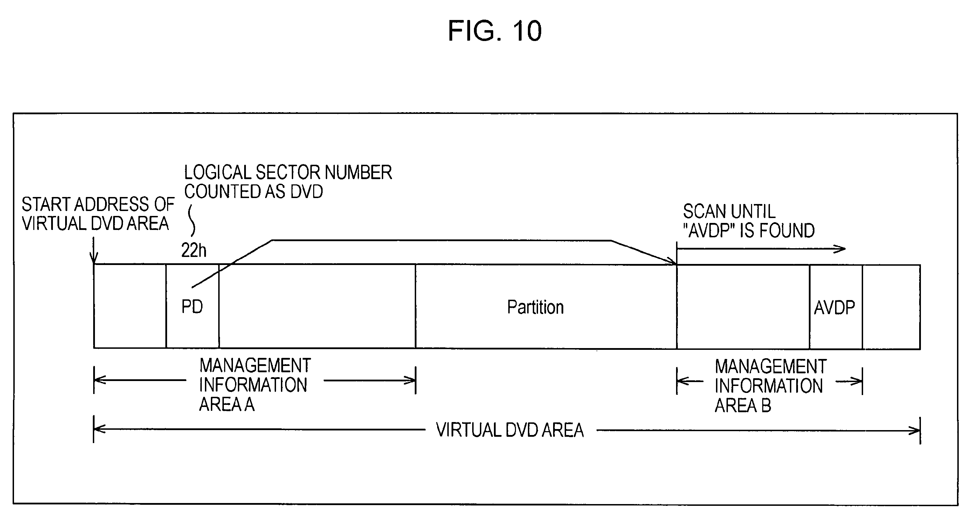

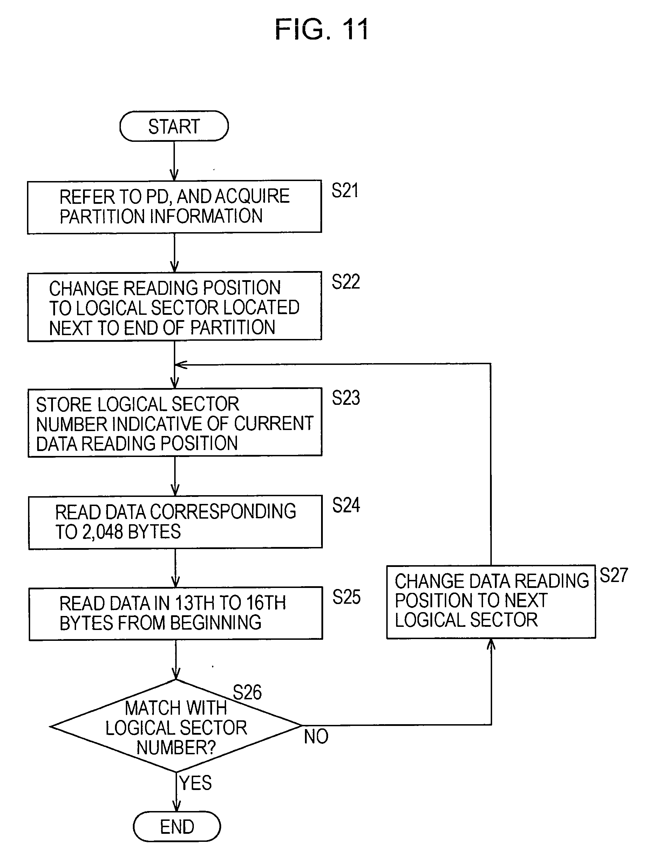

Incidentally, when performing reproduction or dubbing processing with the hard disk recorder 1 shown in Fig. 1, AV data, for example, is read from each of the virtual DVD areas arranged on the hard disk 18A. In this case, to read data properly, it is necessary to detect the end of effective data, that is, the end of disk image data. However, as described above, the lead-in area and the lead-out area, which exist in the actual DVD recording structure, do not exist in each of the virtual DVD areas arranged on the hard disk 18A. Therefore, it is necessary to detect the end of each disk image data by using other information. This processing will be described below with reference to Figs. 10 and 11.

Fig. 10 is a diagram showing the configuration of the virtual DVD area arranged on the hard disk 10A.

A management information area A in Fig. 10 corresponds to the management information area 32 in Fig. 2, and Partition in Fig. 10 corresponds to the management information area 34 in Fig. 2.

PD (Partition Descriptor) present within the management information area A includes information relating to Partition. For example, PD includes information indicating the start address (the beginning logical sector number) of Partition and the size of Partition.

It should be noted that PD is information set in the area of 2048 bytes. With the start address (logical sector number = 0) of each virtual DVD area as the base point, this area is located at the 69632nd byte. When indicated by the logical sector number in UDF, since one sector equals 2048 bytes in UDF, this position corresponds to the 34 (= 69632/2048) (0x22)-th sector. Further, when indicated by the logical sector number in a hard disk, since one sector equals 512 bytes in the hard disk, this position corresponds to the 136 (= 69632/512) (0x88)-th sector.

For example, AV data or the like is recorded in Partition.

AVDP (Anchor Volume Descriptor Pointer) present within a management information area B is information indicating the end of a volume, and the address (logical sector number) at which the AVDP is located represents the end of disk image data. Further, the logical sector number in which the AVDP is located is set to the area (TagLocation) of 4 bytes at the 13th to 16th bytes from the beginning of the AVDP.

Fig. 11 is a flowchart illustrating the processing of detecting the end of disk image data arranged on the hard disk 18A.

In the processing according to the flowchart of Fig. 11, AVDP (the AVDP in Fig. 10) located at the last of data recorded in the virtual DVD area is detected, and the end of disk image data is detected from the position where the AVDP is located.

That is, in step S21, the UDF processing section 15 (Fig. 1) refers to PD, and acquires partition information. That is, the UDF processing section 15 detects PD included in the management information A shown in Fig. 10, and acquires, from information included in the PD, the logical sector number at the beginning of Partition (the Partition in Fig. 10) and the size of Partition.

In step S22, the UDF processing section 15 (Fig. 1) changes the data reading position (indicated by the logical sector number) to the logical sector located next to the end of Partition. That is, the UDF processing section 15 calculates, from the information acquired in step S21, the logical sector number indicating the logical sector located next to the last logical sector of Partition, and sets this logical sector number as the reading position.

In step S23, the UDF processing section 15 stores the logical sector number indicating the current data reading position. That is, the UDF processing section 15 temporarily stores the logical sector number read in step S22. Then, the processing advances to step S24.

In step S24, the UDF processing section 15 reads data of 2048 bytes from the data reading position thus changed, and the processing advances to step S25.

In step S25, with the beginning of the data of 2048 bytes (1 sector) read in step S24 as the base point, the UDF processing section 15 reads data set in the area of 4 bytes at the 13th to 16th bytes.

The processing advances from step S25 to step S26, where the UDF processing section 15 makes a determination as to whether or not the value of the stored logical sector number and the value of the data read in step S25 match with each other. If it is determined in step S26 that the value of the stored logical sector number and the data read in step S25 do no match with each other, the processing advances to step S27.

In step S27, the UDF processing section 15 changes the data reading position to the next logical sector. That is, the UDF processing section 15 changes the data reading position to the logical sector located next to the logical sector at the current data reading position. Then, the processing returns to step S23, and the above-described processing is repeated.

On the other hand, if it is determined in step S26 that the value of the logical sector number stored in the UDF processing section 15 and the value of the data read in step S25 match with each other, the logical sector at the current data reading position is recognized as the end of disk image data, and the processing ends.

The series of processing from steps S24 to S26 is processing for detecting TagLocation included in AVDP. In Taglocation, the beginning logical sector number where the AVDP, which is a tag including information thereof, is set; accordingly, if it is determined in the determination processing in step S26 that the value of the stored logical sector number and the value of the data read in step S25 match with each other, it can be learned that the data of 2048 bytes read in step S24 is the AVDP.

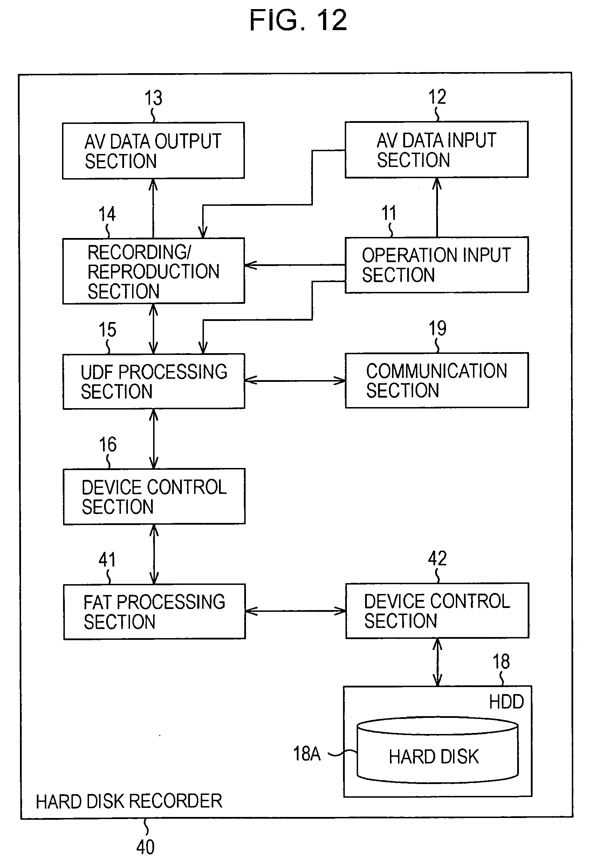

Next, Fig. 12 is a block diagram showing another embodiment of a hard disk recorder to which the present invention is applied. In Fig. 12, the portions that are identical to those shown in Fig. 1 are denoted by the same reference numerals, and detailed description thereof will be omitted as appropriate.

In a hard disk recorder 40 shown in Fig. 12, when requested to record data in the UDF format including recording data supplied from the device control section 16, an FAT processing section 41 creates disk image data by buffering the data of the UDF format including recording data supplied from the device control section 16, and in accordance with the format of FAT (File Allocation Table (for example, FAT32), requests a device control section 42 to record the disk image data.

Further, when reading of AV data recorded on the hard disk 18A of the HDD 18 is requested from the device control section 16, in accordance with the format of FAT (for example, FAT32), the FAT processing section 41 requests the device control section 42 to read disk image data including the AV data to be read. The FAT processing section 41 then extracts, from the disk image data supplied from the device control section 42 in response to the request, the AV data for which the read request is made by the device control section 16, and supplies it to the device control section 16.

In accordance with a request from the FAT processing section 41, using the ATA command, the device control section 42 requests the HDD 18 to record information (for example, AV data) onto the hard disk 18A or read information such as AV data recorded on the hard disk 18A. Further, the device control section 42 supplies information supplied from the HDD 18 in response to the read request, to the FAT processing section 41.

Here, in the hard disk 18A shown in Fig. 12, FAT (FAT32) is used as the file system.

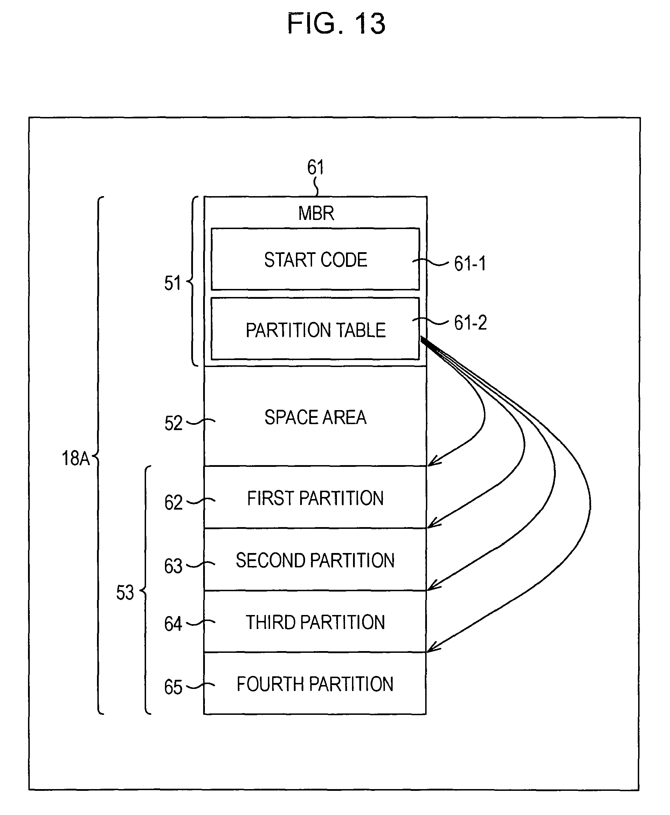

In this connection, Fig. 13 illustrates the configuration of the hard disk 18A in which the FAT shown in Fig. 12 is used.

The hard disk 18A includes a beginning sector (sector with LBA (Logical Block Addressing) = 0) 51 including MBR (Master Boot Record) 61, a space area 52 extending from immediately after (LBA = 1) the beginning sector 51 to the beginning of a data area 53, and the data area 53 that is subject to file system processing.

The data area 53 can be divided into a maximum of four partitions. In Fig. 13, the data area 53 is divided into four partitions including a first partition 62, a second partition 63, a third partition 64, and a fourth partition 65.

The MBR 61 includes a start code 61-1 and a partition table 61-2. Of these, the partition table 61-2 retains information such as the start addresses (information such as those indicated by the arrows in Fig. 13) or sizes of partitions entered therein. The maximum number of partitions into which the data area 53 can be divided, that is, four partitions (the first partition 62, the second partition 63, the third partition 64, and the fourth partition 65) can be entered in the partition table 61-2.

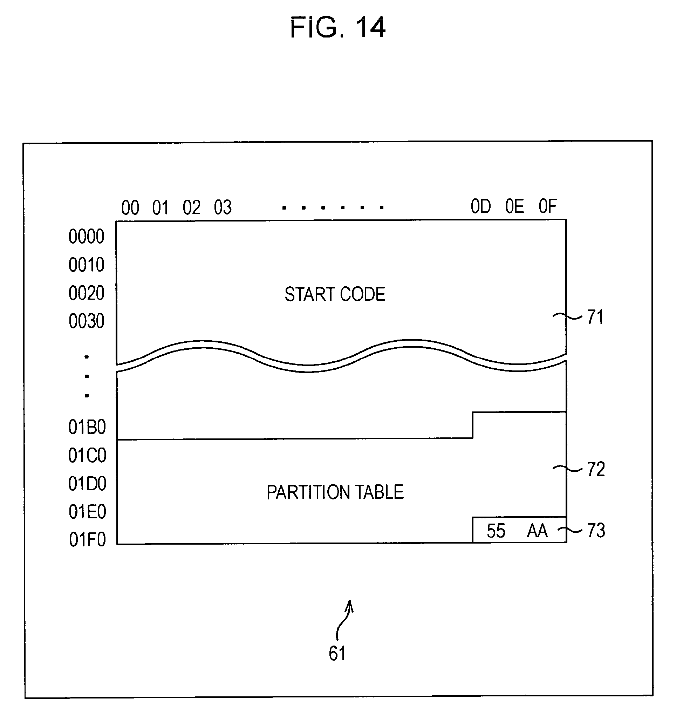

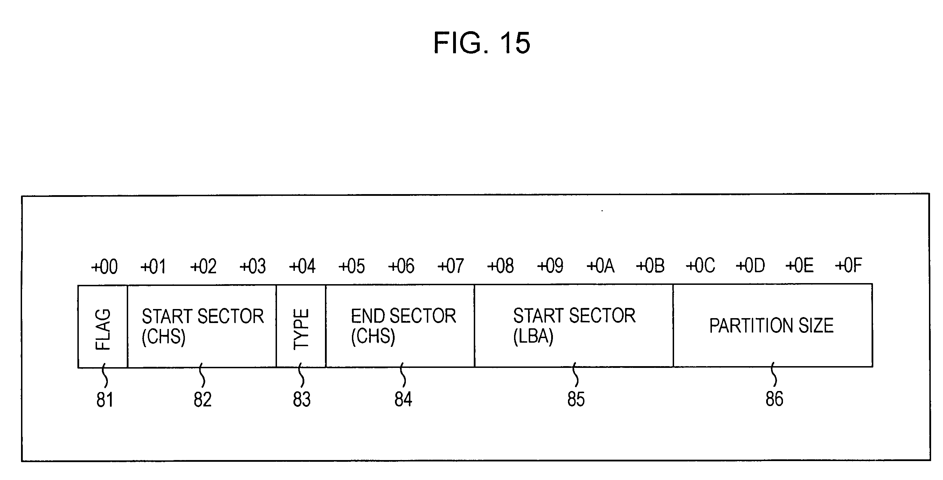

Next, referring to Figs. 14 and 15, the configuration of the MBR 16 of the hard disk 18A shown in Fig. 13 will be described.

Fig. 14 is a diagram showing the configuration of the MBR 61 included in the configuration of the hard disk 18A shown in Fig. 13, and Fig. 15 is a diagram showing the configuration of partition information included in the partition table 61-2 constituting the MBR 61.

As shown in Fig. 14, the MBR 61 is arranged in the beginning cluster of 512 bytes of the hard disk 18A. The MBR 61 includes a start code 71 (the start code 61-1 of Fig. 13) consisting of an area of 445 bytes starting from the first byte of the beginning cluster, a partition table 72 (partition table 61-2 of Fig. 13) consisting of an area of 64 bytes starting from the 446th byte, and information 73 of the last 2 bytes.

As described above, the partition table 72 is an area in which partition information (for example, the start address, size, etc. of partition) corresponding to each of the up to four partitions can be stored. The partition information will be described later.

The information 73 of the last 2 bytes of the MBR 61 are "0x55" and "0xAA" indicating the end of the partition table 72.

Fig. 15 is a diagram showing the configuration of partition information stored in the partition table 72 shown in Fig. 14.

The partition information is 16-byte information and includes, in order from the beginning, a flag 81 of 1 byte, a CHS (Cylinder/Head/Sector) start sector 82 of 3 bytes, a type 83 of 1 byte, a CHS end sector 84 of 3 bytes, an LBA start sector 85 of 4 bytes, and a partition size 86 of 4 bytes.

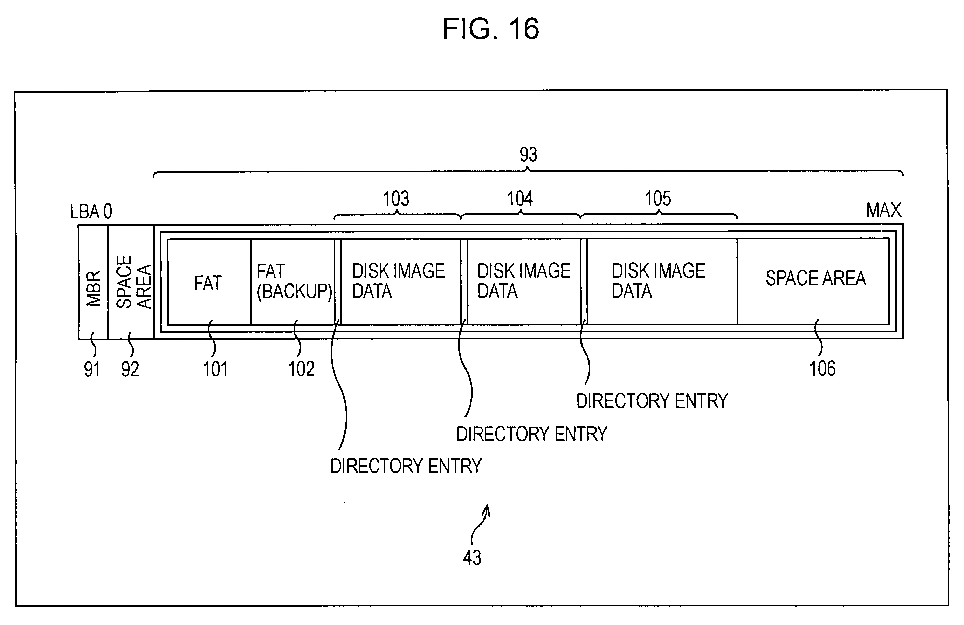

Fig. 16 is a diagram illustrating an example of the configuration of the recording area on the hard disk 18A of the hard disk recorder 40 shown in Fig. 12, and shows a more detailed partition configuration than the one shown in Fig. 13.

It should be noted that while in Fig. 13 four partitions, the first partition 62, the second partition 63, the third partition 64, and the fourth partition 65 are formed in the hard disk 18A, in Fig. 16, only one partition 93 is formed.

The partition 93 includes an FAT (File Allocation Table) 110, an FAT (backup) 102, a file 103, a file 104, a file 106, and a space area 106. The file 103, the file 104, and the file 105 each include a directory entry and disk image data.

It should be noted that in Fig. 16, MBR 91 and the space area 92 correspond to the beginning sector 51 (MBR 61) and the space area 52 shown in Fig. 13, respectively.

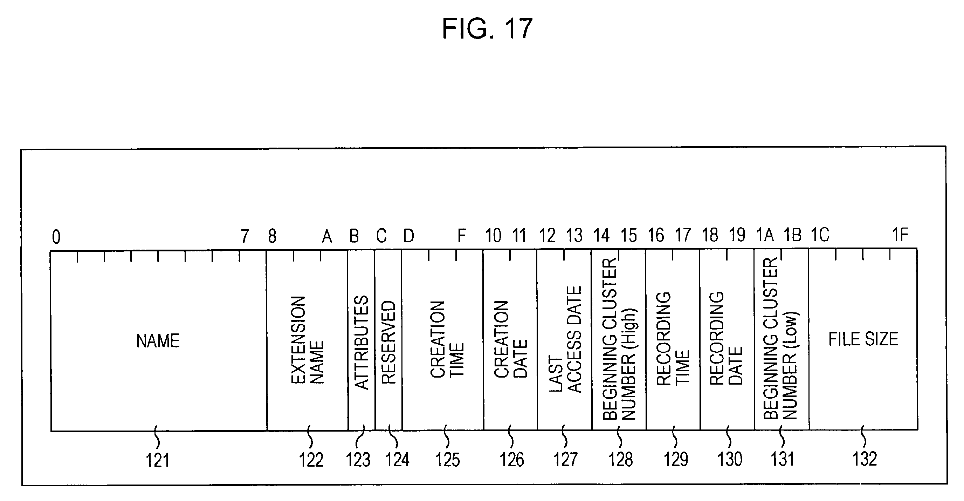

Fig. 17 is a diagram showing the structure of each directory entry shown in Fig. 16.

The directory entry is information set in an area of 4 bytes. The information includes: an area of 8 bits in which a name 121 indicating the file name is recorded; an area of 3 bits in which an extension name 122 indicating a file extension is recorded; an area of 1 bit in which an attributes 123 indicating the attributes of a file (for example, information such as writing prohibition) is recorded; an unused area of 1 bit in which a reservation 124 is recorded; an area of 3 bits in which a creation time 125 indicating the creation time of a file is recorded; an area of 2 bits in which a creation date 126 indicating the creation date of a file is recorded; an area of 2 bits in which a last access date 127 indicating the date of the last access to a file is recorded; an area of 2 bits in which a beginning cluster number (High) 128, which indicates the value of the upper 2 bits of the beginning cluster number of the data constituting a file, is recorded; an area of 2 bits in which a recording time 129 indicating the recording time of a file is recorded; an area of 2 bits in which a recording date 130 indicating the recording date of a file is recorded; an area of 2 bits in which a beginning cluster number (Low) 131, which indicates the value of the lower 2 bits of the beginning cluster number of the data constituting a file, is recorded; and an area of 4 bits in which a file size 132 indicating the file size is recorded.

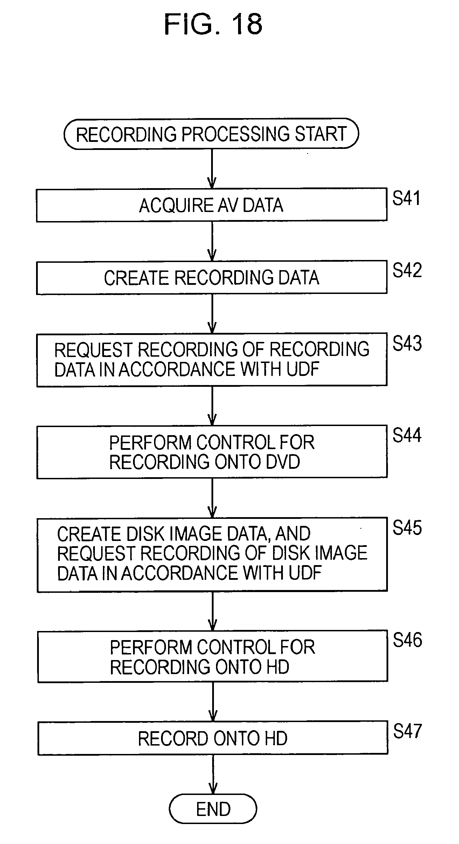

Fig. 18 is a flowchart illustrating the recording processing by the hard disk recorder 40 shown in Fig. 12.

In step S41, the AV data input section 12 acquires AV data, and supplies it to the recording/reproduction processing section 14.

In step S42, on the basis of the AV data supplied from the AV data input section 12, the recording/reproduction processing section 14 creates recording data in accordance with a predetermined format. That is, the recording/reproduction processing section 14 creates recording data in accordance with the video mode or VR mode, and supplies it to the UDF processing section 15 together with information indicating recording.

In step S43, in accordance with UDF, the UDF processing section 15 requests the device control section 16 to record the recording data supplied from the recording/reproduction processing section 14.

In step S44, the device control section 16 supplies the data in the UDF format including recording data, which is supplied from the UDF processing section 15, to the FAT processing section 41 together with a record command.

In step S45, the FAT processing section 41 creates disk image data by buffering the data in the UDF format including recording data, which is supplied from the device control section 16 together with the record command.

Further, in step S45, the FAT processing section 41 handles the created disk image data as one file data in accordance with the FAT (for example, FAT32) format, and requests the device control section 42 to record the data as the data of a file with an extension, for example, ".iso" (hereinafter, referred to as the "iso file" as appropriate).

In step S46, the device control section 42 supplies the disk image data (data of the iso file) supplied from the FAT processing section 41 to the HDD 18 together with a record command. The record command here is, for example, the WRITE DMA command of the ATA command described above.

In step S47, the HDD 18 records the disk image data, which is supplied from the device control section 42 together with the record command, onto the hard disk 18A.

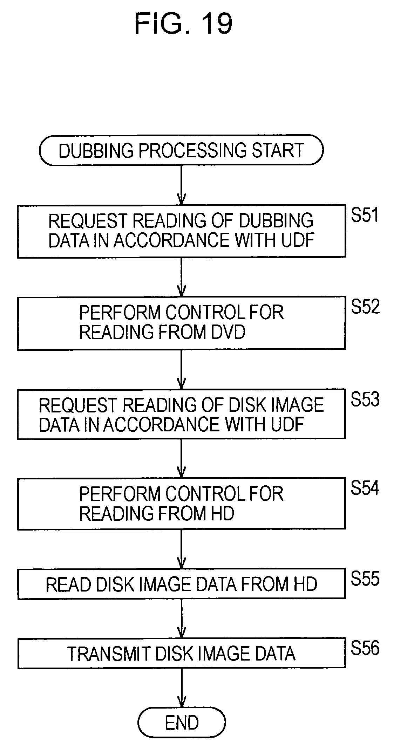

Fig. 19 is a flowchart illustrating the dubbing processing in the hard disk recorder 40 shown in Fig. 12.

In the following, description will be given of the case in which disk image data (including AV data) recorded on the hard disk 18A of the hard disk recorder 40 is dubbed (transmitted) onto an external device connected to the hard disk recorder 40 via a network.

In step S51, the UDF processing section 15 requests reading of dubbing data in accordance with UDF. That is, the UDF processing section 15 requests the device control section 16 to read the disk image data designated through user's operation.

In step S52, the device control section 16 supplies a read command for reading disk image data to the FAT processing section 41. The read command here is, for example, the READ (10) command of the ATAPI command described above.

In step S53, in response to the read command from the device control section 16, the FAT processing section 41 requests the device control section 42 to read the disk image data (data of the iso file), in accordance with the FAT format.

In step S54, in response to the request from the FAT processing section, the device control section 42 supplies a read command, for example, the READ DMA command of the ATA command, to the HDD 18.

In step S55, the HDD 18 reads disk image data recorded on the hard disk 18A, and supplies it to the device control section 42.

The disk image data read in step S55 is supplied to the FAT processing section 41 via the device control section 42, and further, in response to the read command supplied from the device control section 16, is supplied from the FAT processing section 41 to the UDF processing section 15 via the device control section 16.

In step 556, the UDF processing section 15 supplies to the communication section 19 the disk image data supplied from the device control section 16. The communication section 19 transmits via a network the disk image data supplied from the UDF processing section 15 to a DVD recorder as an external device onto which the disk image data is to be dubbed.

As described above, although different from the hard disk recorder 1 shown in Fig. 1 in that disk image management is performed using FAT as the file system, the hard disk recorder 40 shown in Fig. 12 can provide the same effect as that of the hard disk recorder 1 shown in Fig. 1.

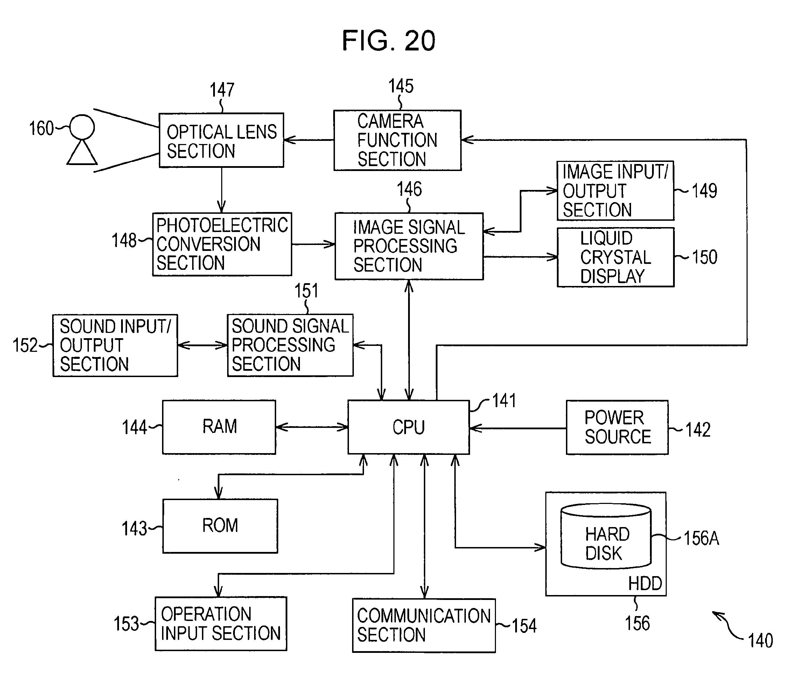

Fig. 20 is a block diagram showing a configuration example of an embodiment of a video camera to which the present invention is applied.

In a video camera 140 shown in Fig. 20, the processing of disk image data carried out by the hard disk recorder 1 shown in Fig. 1 or the hard disk recorder 40 shown in Fig. 12 is realized by means of software.

In the video camera 140, a power source 142, a ROM (Read Only Memory) 143, and a RAM (Random Access Memory) 144 are connected to a CPU (Central Processing Unit) 141. The CPU 141 is driven by the power source 142, and controls the overall operation of the video camera 140 in accordance with a program stored in the ROM 143. Data necessary for the CPU 141 to execute various processing and the like is stored in the RAM 144 as appropriate. The power source 142 supplies electric power to necessary blocks in addition to the CPU 141.

The CPU 141 controls a camera function section 145, an image signal processing section 146, and a sound signal processing section 151. The camera function section 145 controls an optical lens section 147 in accordance with the control of the CPU 141, thereby adjusting the zoom ratio, aperture, and the like as appropriate.

A photo-conversion section 148 is composed of, for example, a CMOS (Complementary Metal Oxide Semiconductor) imager or CCDs (Charge Coupled Devices). The photo-conversion section 148 converts the light of a subject 160 or the like entering through the optical lens section 147 into an electrical signal (electrical signal corresponding to the image of the subject 160), and supplies the electrical signal to the image signal processing section 146. On the basis of the control of the CPU 141, the image signal processing section 146 converts the electrical signal corresponding to the image of the subject 160, which is supplied from the photoelectric conversion section 148, into image data in a predetermined format, and supplies the image data to the CPU 141 and a liquid crystal display 150. The liquid crystal display 150 displays an image on the basis of the image data from the image signal processing section 146.

Further, on the basis of the control of the CPU 141, the image signal processing section 146 converts image data supplied from an image input/output section 149 into data of a predetermined format, and supplies the data to the CPU 141 and the liquid crystal display 150.

In accordance with the control of the CPU 141, a sound signal processing section 151 controls a sound input/output section 152 so as to collect sound. The sound input/output section 152 is composed of, for example, a microphone, a speaker, or a sound input/output terminal. On the basis of the control of the CPU 141, the sound signal processing section 151 converts the electrical signal corresponding to the sound collected by the sound input/output section 152 into sound data of a predetermined format, and supplies the sound data to the CPU 141. Further, the sound processing section 151 supplies the sound data supplied from the CPU 151 to the sound input/output section 152.

The CPU 141 converts the image data and sound data supplied from the image signal processing section 146 into recording data in accordance with the video mode or VR mode, supplies the recording data to an HDD 156 together with a record command in accordance with UDF, and controls the recording of the recording data onto a hard disk 156A in the same manner as the hard disk recorder 1 shown in Fig. 1 and the hard disk recorder 40 shown in Fig. 12.

An operation input portion 153 is composed of a button, a switch, or a remote controller, and supplies, when an input operation corresponding to a predetermined command is performed by the use, an operation command signal corresponding to the input operation to the CPU 141. The CPU 141 executes processing corresponding to the operation command signal supplied from the operation input section 153.

Further, on the basis of the control of the CPU 141, a communication section 154 executes communication processing with another information processing device (not shown). That is, the communication section 154 transmits image data or sound data output from the image signal processing section 146 or the sound signal processing section 151, or data recorded on the hard disk 156A, to another information processing device, and receives various information such as image data, sound data, and a program transmitted from the other information processing device. For example, when the communication section 154 has received image data, the CPU 141 causes the image data to be stored onto the RAM 144 or the hard disk 156A. Further, for example, when the communication section 154 has received a program, the CPU 141 loads the program into the RAM 144.

It should be noted that the communication section 154 may be one that performs wireless communication or one that performs wired communication, or one capable of performing both wired and wireless communications. Further, there are no particular limitations on the communication system. In the case of wireless communication, for example, there may be used various wireless communication systems such as a wireless LAN (Local Area Network) with IEEE (The Institute of Electrical and Electronic Engineers, Inc.) 802.11a or 802.11b, or the Bluetooth. Likewise, in the case of wired communication, there may be used various wired communication systems such as the Ethernet (registered trademark) or USB, or IEEE 1394.

While the above-described series of processing relating to disk image data can be executed by dedicated hardware as described above, it may be executed by means of software as well.

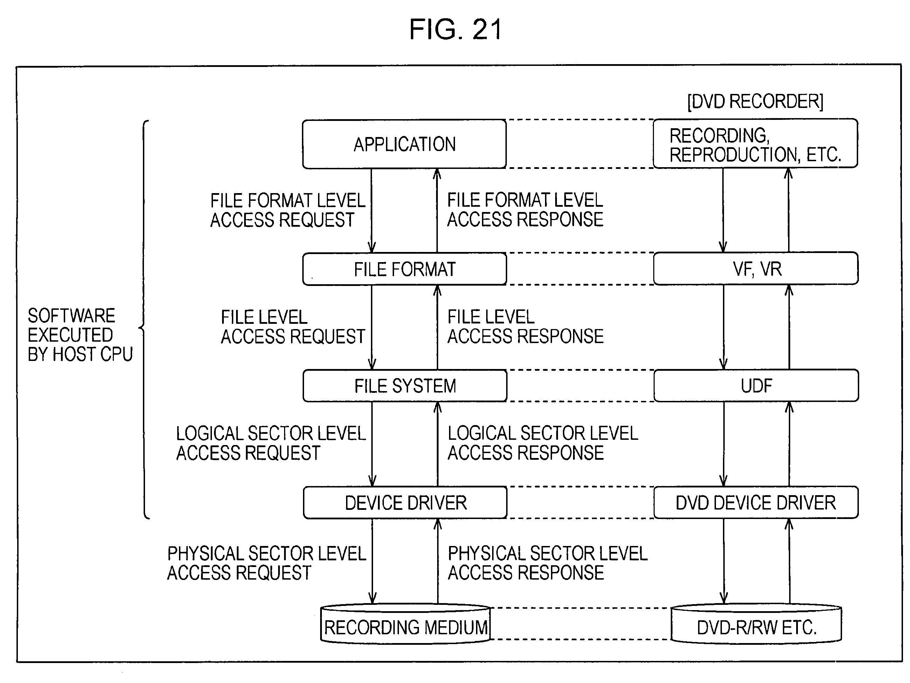

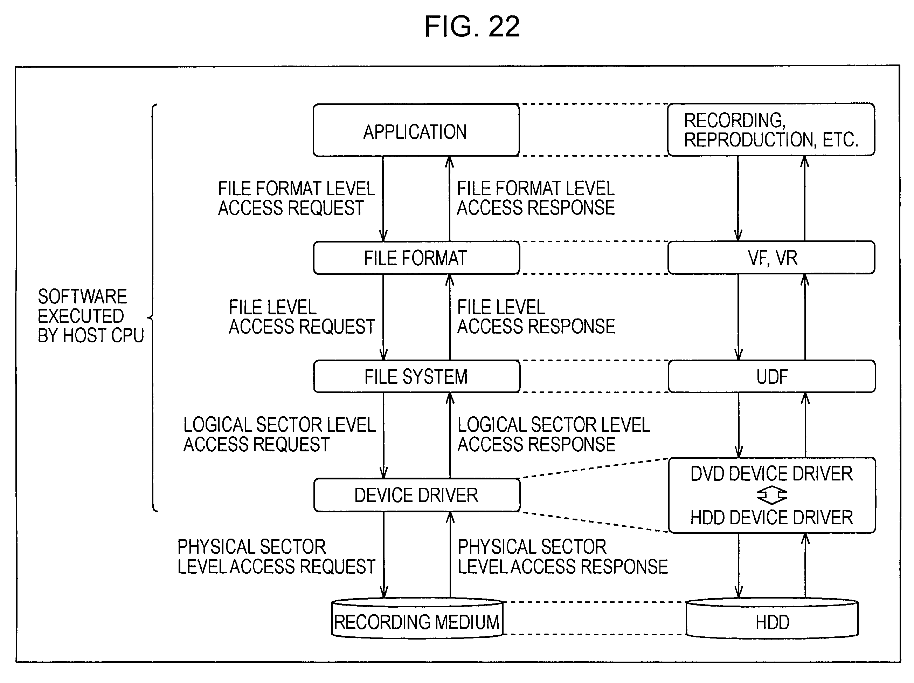

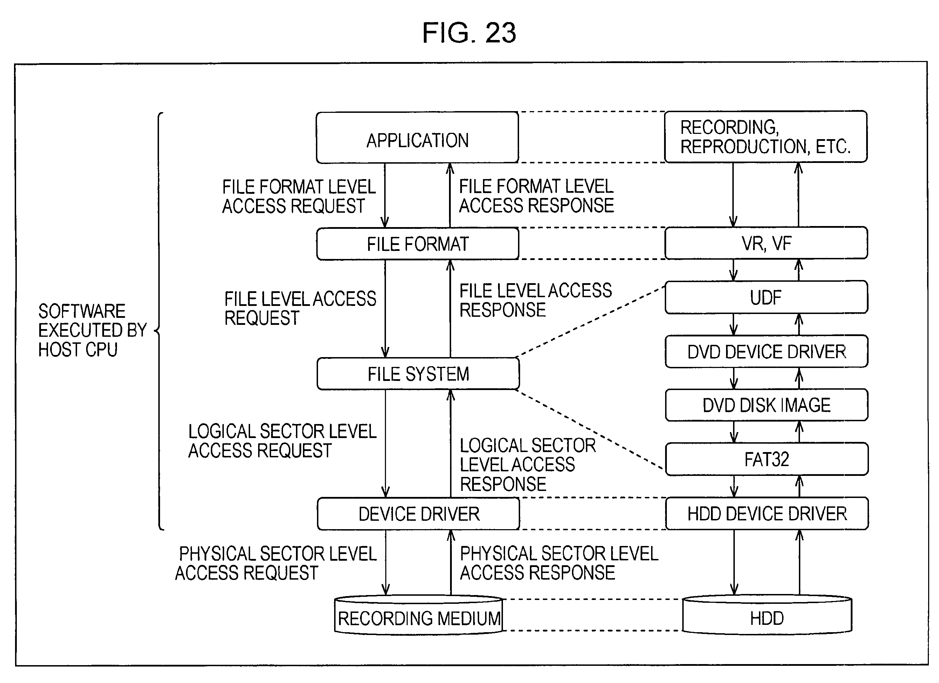

In this connection, when the series of processing relating to disk image data is to be realized by means of software, as shown on the left-hand side of Fig. 21 (Figs. 22, 23), the processing can be divided into four hierarchical layers consisting of an application layer, a file format layer, a file system layer, and a device driver layer.

In the application layer, access is made to the file format layer at the file format level, and in the file format layer, access is made to the file system layer at the file level. Further, in the file system layer, access is made to the device driver layer at the logical sector level, and in the device driver layer, access is made to the recording medium at the physical level via a physical layer, that is, via a device such as a driver.

Here, the right-hand side of Fig. 21 shows the processing executed by a DVD recorder on a layer-by-layer basis.

An application for performing processing such as recording or reproduction corresponds to the application layer.

The video mode (VF: Video Format) or the VR mode (Video Recording Format), for example, corresponds to the file format layer. The file format layer performs creation of data in the video mode or VR mode, or recognition of data supplied from the file system layer as a lower layer.

The file system layer requests, in accordance with UDF, recording of data onto a DVD or reading of data recorded on a DVD.

A DVD device driver corresponds to the device driver layer. The device driver layer requests a DVD drive to record data onto a DVD or read data recorded on a DVD, in accordance with a request from the file system layer.

The right-hand side of Fig. 22 shows the processing executed by the hard disk recorder 1 shown in Fig. 1 on a layer-by-layer basis. Note that the left-hand side of Fig. 22 is the same as the left-hand side of Fig. 21.

In Fig. 22, since the application layer, the file format layer, and the file system layer are the same as those shown in Fig. 21, description thereof is omitted.

Since the hard disk recorder 1 makes access to the hard disk 18A by employing the same processing as those executed by the DVD recorder described in Fig. 21 with respect to the processing in the application layer, the file format layer, and the file system layer, it is necessary to convert a command issued for making access to a DVD into a command for making access to a hard disk.

Accordingly, the ATAPI command is converted into the ATA command in the device driver layer.

It should be noted that in Fig. 22, the UDF processing section 15 shown in Fig. 1 corresponds to the file system layer. Further, the device control section 16 and the device control section 17 shown in Fig. 1 correspond to the device driver layer.

Fig. 23 is a diagram showing the processing executed by the hard disk recorder 40 shown in Fig. 12 on a layer-by-layer basis.

In Fig. 23, since the application layer and the file format layer are the same as those in Fig. 21, description thereof is omitted.

The hard disk recorder 40 uses both UDF used for a DVD and FAT32 used for an HDD in the file system layer.

For this reason, in the file system layer, disk image data is created in accordance with UDF. Specifically, using a DVD device driver, disk image data is created in a virtual recording area (for example, a RAM (for example, the FAT processing section 41 shown in Fig. 12) built in the apparatus). This disk image data is managed as an FAT32 file and recorded on the hard disk 18A.

Accordingly, an HDD device driver is used in the device driver layer.

It should be noted that in Fig. 23, the UDF processing section 15, the device control section 16, and the FAT processing section 41 shown in Fig. 12 correspond to UDF, the DVD device driver, and FAT32 in the file system layer, respectively. Further, the device control section 42 shown in Fig. 12 corresponds to the HDD device driver in the device driver layer.

When executing the above-described series of processing by means of software, a program constituting the software is installed from a recording medium into a computer incorporated in dedicated hardware, or, for example, into a general-purpose personal computer 200 shown in Fig. 25 that can be caused to execute various functions by installing various programs into the personal computer 200.

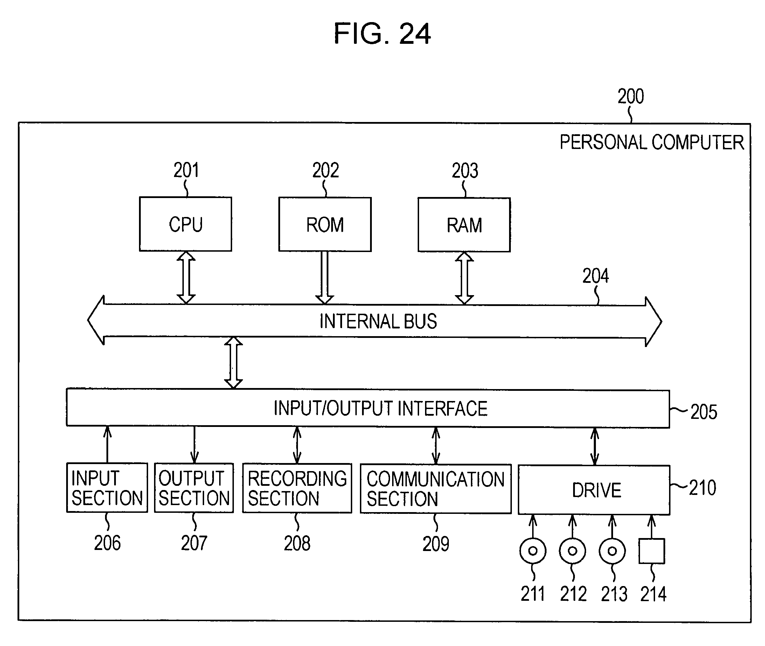

As shown in Fig. 24, this recording medium is constituted by not only a package medium recording a program and distributed to the user separately from the personal computer 200 to distribute the program, such as a magnetic disk 211 (including a flexible disk), an optical disk 212 (including CD-ROM (Compact Disc-Read Only Memory) and a DVD (Digital Versatile Disk)), a magneto-optical disk 213 (including MD (Mini-Disc)(Trademark)), or a semiconductor memory 214, but also by a ROM 202 recording the program, which is provided to the user in a state previously incorporated in the personal computer 200, a hard disk included in a recording section 208, or the like.

A CPU 201 of the personal computer 200 controls the overall operation of the personal computer. Further, when a command is input from the user through an input section 206 having a keyboard, a mouse, or the like via a bus 204 and an input/output interface 205, the CPU 201 executes, in response to this command, a program stored in the ROM (Read Only Memory) 202. Alternatively, the CPU 201 loads into a RAM (Random Access Memory) 203 a program that is read from the magnetic disk 211, the optical disk 112, the magneto-optical disk 113, and the semiconductor memory 214, which are connected to a drive 210, and is installed into the recording section 208, and executes the program. Further, the CPU 201 outputs the data obtained by executing the program to an output section 207 having a display, a speaker, or printer, a printer or plotter, or the like. Further, the CPU 201 acquires data from the input section 206 composed of a scanner or microphone. Further, the CPU 201 controls a communication section 209 to communicate with the external, thereby executing the exchange of data.

It should be noted that the communication section 209 may be one that performs wireless communication or one that performs wired communication, or one capable of performing both wired and wireless communications. Further, there are no particular limitations on the communication system. In the case of wireless communication, for example, there may be used various wireless communication systems such as a wireless LAN (Local Area Network) with IEEE (The Institute of Electrical and Electronic Engineers, Inc.) 802.11a or 802.11b, or the Bluetooth. Likewise, in the case of wired communication, there may be used various wired communication systems such as the Ethernet (registered trademark) or USB, or IEEE 1394.

It should be noted that the program for executing the series of processing described above may be installed into a computer via a wired or wireless communication medium such as the Local Area Network, Internet, or digital satellite broadcast through the intermediation of an interface such as a router or modem as required.

Further, in this specification, the step of describing the program stored in a recording medium includes not only processes executed in a time series manner according to the order given but also processes that are not necessarily executed in a time series manner but executed in parallel or individually.

It should be noted that while in this embodiment the description is directed to the case in which a hard disk is used as an example of a recording medium recording disk image data, the recording medium for recording disk image data may be a recording medium on a disk which allows random access, such as an MO (Magnetic Optical Disk), a PD (Phase change rewritable Disk), a Zip disk, or SuperDisk which adopts the ZCAV (Zone Constant Angular Velocity) system.

Further, the file system used is not limited to FAT32 but other file systems may be used.

Further, the above-described disk image data is not limited to the contents (series of information arranged in the area of the logical sector numbers 0 to N (last logical sector number) in the UDF) defined in this specification.

Further, the data recorded on the hard disk 18A may not be AV data but may be some other data.

Further, the HDD 18 may not be a built-in type one but may be externally mounted.

Further, the disk image data may not be one recorded on a DVD. The disk image data may alternatively be, for example, data recorded on a video CD (Compact Disc) or an audio CD.

Further, while in this embodiment data is copied onto a DVD player from the hard disk recorder 1 or the hard disk recorder 4, data may be moved instead of being copied.

## Claims

1. An information processing apparatus comprising:
recording requesting means for requesting recording of recording data, which is data to be recorded, in accordance with a predetermined format adopted for a first recording medium;
first recording control means for controlling recording of the recording data onto the first data recording medium, in response to the request for recording the recording data made by the recording requesting means; and
second recording control means for controlling recording of the recording data onto a second recording medium, in accordance with the control of the first recording control means.

2. The information processing apparatus according to Claim 1, wherein:
the first recording control means outputs the recording data together with a command requesting recording of the recording data onto the first data recording medium; and
the second recording control means causes the recording data to be recorded onto the second data recording medium by converting the command output by the first recording control means into a command requesting recording of data onto the second data recording medium and outputting the command.

3. The information processing apparatus according to Claim 1, further comprising another recording requesting means for requesting recording of the recording data in accordance with another format different from the predetermined format,
wherein:
the other recording requesting means requests recording of the recording data output by the first recording control means, in accordance with the other format; and
the second recording control means causes the recording data to be recorded onto the second data recording medium, in response to the request for recording the recording data made by the other recording requesting means.

4. The information processing apparatus according to Claim 1, wherein:
the first data recording medium is an optical disk; and
the second data recording medium is a hard disk.

5. An information processing method comprising:
a recording requesting step of requesting recording of recording data, which is data to be recorded, in accordance with a predetermined format adopted for a first recording medium;
a first recording control step of controlling recording of the recording data onto the first data recording medium, in response to the request for recording the recording data made in the recording requesting step; and
a second recording control step of controlling recording of the recording data onto a second recording medium, in accordance with the control of the first recording control step.

6. A program recording medium in which a program is written, the program causing a computer to execute processing comprising:
a recording requesting step of requesting recording of recording data, which is data to be recorded, in accordance with a predetermined format adopted for a first recording medium;
a first recording control step of controlling recording of the recording data onto the first data recording medium, in response to the request for recording the recording data made in the recording requesting step; and
a second recording control step of controlling recording of the recording data onto a second recording medium, in accordance with the control of the first recording control step.

7. A program for causing a computer to execute processing comprising:
a recording requesting step of requesting recording of recording data, which is data to be recorded, in accordance with a predetermined format adopted for a first recording medium;
a first recording control step of controlling recording of the recording data onto the first data recording medium, in response to the request for recording the recording data made in the recording requesting step; and
a second recording control step of controlling recording of the recording data onto a second recording medium, in accordance with the control of the first recording control step.

8. An information processing apparatus comprising:
reading requesting means for requesting reading of record data, which is previously recorded data, in accordance with a predetermined format adopted for a first recording medium;
first reading control means for controlling reading of the record data from the first recording medium, in response to the request by the reading requesting means; and
second reading control means for controlling reading of the record data from a second recording medium, in accordance with the control of the first reading control means.

9. The information processing apparatus according to Claim 8, wherein:
the first reading control means outputs a command requesting reading of the record data from the first data recording medium; and
the second reading control means causes the record data to be read from the second data recording medium by converting the command output by the first reading control means into a command requesting reading of the record data from the second data recording medium and outputting the command.

10. The information processing apparatus according to Claim 8, further comprising another reading requesting means for requesting reading of the record data in accordance with another format different from the predetermined format,
wherein:
the other reading requesting means requests, in response to the command output by the first reading control means, reading of the record data in accordance with the other format; and
the second reading control means causes the record data to be read from the second data recording medium, in response to the request for reading the record data made by the other reading requesting means.

11. The information processing apparatus according to Claim 8, further comprising communication means for communicating with an external device including the first data recording medium to transfer the record data read from the second data recording medium to the external device including the first data recording medium.

12. The information processing apparatus according to Claim 8, wherein:
the first data recording medium is an optical disk; and
the second data recording medium is a hard disk.

13. An information processing method comprising:
a reading requesting step of requesting reading of record data, which is previously recorded data, in accordance with a predetermined format adopted for a first recording medium;
a first reading control step of controlling reading of the record data from the first recording medium, in response to the request made in the reading requesting step; and
a second reading control step of controlling reading of the record data from a second recording medium, in accordance with the control of the first reading control step.

14. A program recording medium in which a program is written, the program causing a computer to execute processing comprising:
a reading requesting step of requesting reading of record data, which is previously recorded data, in accordance with a predetermined format adopted for a first recording medium;
a first reading control step of controlling reading of the record data from the first recording medium, in response to the request made in the reading requesting step; and
a second reading control step of controlling reading of the record data from a second recording medium, in accordance with the control of the first reading control step.

15. A program for causing a computer to execute processing comprising:
a reading requesting step of requesting reading of record data, which is previously recorded data, in accordance with a predetermined format adopted for a first recording medium;
a first reading control step of controlling reading of the record data from the first recording medium, in response to the request made in the reading requesting step; and
a second reading control step of controlling reading of the record data from a second recording medium, in accordance with the control of the first reading control step.

16. An information processing apparatus comprising:
a recording requesting section requesting recording of recording data, which is data to be recorded, in accordance with a predetermined format adopted for a first recording medium;
a first recording control section controlling recording of the recording data onto the first data recording medium, in response to the request for recording the recording data made by the recording requesting section; and
a second recording control section controlling recording of the recording data onto a second recording medium, in accordance with the control of the first recording control section.

17. An information processing method comprising:
requesting recording of recording data, which is data to be recorded, in accordance with a predetermined format adopted for a first recording medium;
performing first recording control for recording the recording data onto the first data recording medium, in response to the request for recording the recording data; and
performing second recording control for recording the recording data onto a second recording medium in accordance with the first recording control.

18. An information processing apparatus comprising:
a reading requesting section requesting reading of record data in accordance with a predetermined format adopted for a first recording medium;
a first reading control section controlling reading of the record data from the first recording medium, in response to the request by the reading requesting section; and
a second reading control section controlling reading of the record data from a second recording medium, in accordance with the control of the first reading control section.

19. An information processing method comprising:
requesting reading of record data in accordance with a predetermined format adopted for a first recording medium;
performing first reading control for reading the record data from the first recording medium in response to the request; and
performing second reading control for reading the record data from a second recording medium in accordance with the first reading control.
